(19)

Europäisches Patentamt
European Patent Office
Office européen des brevets

(11) **EP 3 373 641 B1**

(12) **EUROPEAN PATENT SPECIFICATION**

(45) Date of publication and mention
of the grant of the patent:
**27.10.2021 Bulletin 2021/43**

(21) Application number: **16862492.2**

(22) Date of filing: **04.11.2016**

(51) Int Cl.:
**H04W 4/40** *(2018.01)*        **H04W 72/02** *(2009.01)*

(86) International application number:
**PCT/KR2016/012689**

(87) International publication number:
**WO 2017/078477 (11.05.2017 Gazette 2017/19)**

(54) **METHOD FOR TRANSMITTING DATA OF V2X TERMINAL IN WIRELESS COMMUNICATION SYSTEM AND DEVICE**

VERFAHREN ZUR ÜBERTRAGUNG VON DATEN EINES V2X-ENDGERÄTS IN EINEM DRAHTLOSKOMMUNIKATIONSSYSTEM UND VORRICHTUNG

PROCÉDÉ DE TRANSMISSION DE DONNÉES DE TERMINAL V2X DANS UN SYSTÈME DE COMMUNICATION SANS FIL ET DISPOSITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**04.11.2015   US 201562251087 P**
**05.02.2016   US 201662292217 P**
**15.02.2016   US 201662295158 P**
**17.02.2016   US 201662296092 P**
**25.03.2016   US 201662313129 P**
**01.04.2016   US 201662317476 P**
**11.04.2016   US 201662321183 P**
**12.05.2016   US 201662335664 P**
**13.05.2016   US 201662336572 P**
**24.05.2016   US 201662341046 P**
**24.05.2016   US 201662341064 P**
**22.08.2016   US 201662378180 P**

(43) Date of publication of application:
**12.09.2018   Bulletin 2018/37**

(73) Proprietor: **LG Electronics Inc.**
**Yeongdeungpo-gu**
**Seoul 07336 (KR)**

(72) Inventors:
• **CHAE, Hyukjin**
**Seoul 06772 (KR)**
• **SEO, Hanbyul**
**Seoul 06772 (KR)**
• **LEE, Seungmin**
**Seoul 06772 (KR)**

(74) Representative: **Frenkel, Matthias Alexander**
**Wuesthoff & Wuesthoff**
**Patentanwälte PartG mbB**
**Schweigerstraße 2**
**81541 München (DE)**

(56) References cited:
**WO-A1-2015/034310        WO-A1-2015/130067**
**WO-A1-2015/137720        WO-A1-2015/156604**
**WO-A1-2018/084568        US-A1- 2013 223 353**
**US-A1- 2019 281 405**

• **INTEL CORPORATION: "System Level Analysis of V2X Performance in Freeway Scenario", 3GPP DRAFT; R1-155329 INTEL - V2V URBAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Malmo, Sweden; 20151005 - 20151009 4 October 2015 (2015-10-04), XP051002265, Retrieved from the Internet: URL:http://www.3gpp.org/ftp/Meetings_3GPP_ SYNC/RAN1/Docs/ [retrieved on 2015-10-04]**

EP 3 373 641 B1

• NOKIA NETWORKS: "On UE-to-network relay selection and measurements", 3GPP DRAFT; R1-153063, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150525 - 20150529 24 May 2015 (2015-05-24), XP050972732, Retrieved from the Internet: URL:http://www.3gpp.org/ftp/Meetings_3GPP_ SYNC/RAN1/Docs/ [retrieved on 2015-05-24]

**Description**

TECHNICAL FIELD

Following description relates to a wireless communication system, and more particularly, to a method for a V2X (vehicle to everything) UE to transmit data and an apparatus therefor.

BACKGROUND ART

Wireless communication systems have been widely deployed to provide various types of communication services such as voice or data. In general, a wireless communication system is a multiple access system that supports communication of multiple users by sharing available system resources (a bandwidth, transmission power, etc.) among them. For example, multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi-carrier frequency division multiple access (MC-FDMA) system.

Device-to-device (D2D) communication is a communication scheme in which a direct link is established between user equipments (UEs) and the UEs exchange voice and data directly without an evolved Node B (eNB). D2D communication may cover UE-to-UE communication and peer-to-peer communication. In addition, D2D communication may be applied to machine-to-machine (M2M) communication and machine type communication (MTC).

D2D communication is under consideration as a solution to the overhead of an eNB caused by rapidly increasing data traffic. For example, since devices exchange data directly with each other without an eNB by D2D communication, compared to legacy wireless communication, network overhead may be reduced. Further, it is expected that the introduction of D2D communication will reduce procedures of an eNB, reduce the power consumption of devices participating in D2D communication, increase data transmission rates, increase the accommodation capability of a network, distribute load, and extend cell coverage.

The document "System Level Analysis of V2X Performance in Freeway Scenario" by Intel Corporation, 3GPP DRAFT; R1-155329 suggests a way to decouple resource allocation periodicity (allocation of PSCCH/PSSCH resources) from a UE transmission cycle.

DISCLOSURE OF THE INVENTION

TECHNICAL TASK

A technical task of the present invention is to provide a method for a V2X UE to select a resource for transmitting data and transmit the data using the selected resource.

Technical tasks obtainable from the present invention are non-limited by the above-mentioned technical task. And, other unmentioned technical tasks can be clearly understood from the following description by those having ordinary skill in the technical field to which the present invention pertains.

TECHNICAL SOLUTION

The present invention is defined by the independent claims. Specific embodiments are defined by the dependent claims. To achieve these and other advantages and in accordance with the purpose of the present invention, as embodied and broadly described, according to one embodiment, a method of transmitting data, which is transmitted by a V2X (vehicle to everything) user equipment (UE) in a wireless communication system, includes the steps of excluding first subframes in which transmission performed by a different UE rather than the V2X UE is anticipated from a plurality of subframes, excluding second subframes of which measured energy is equal to or greater than a first threshold value from a plurality of the subframe from which the first subframes are excluded, and performing data transmission in at least a part of a plurality of the subframes from which the first subframes and the second subframes are excluded.

To further achieve these and other advantages and in accordance with the purpose of the present invention, according to a different embodiment, a user equipment (UE) transmitting V2X (vehicle to everything) data in a wireless communication system includes a transmitter and a receiver, and a processor, the processor configured to exclude first subframes in which transmission performed by a different UE rather than the UE is anticipated from a plurality of subframes, the processor configured to excluding second subframes of which measured energy is equal to or greater than a first threshold value from a plurality of the subframe from which the first subframes are excluded, the processor configured to perform data transmission in at least a part of a plurality of the subframes from which the first subframes and the second subframes are excluded.

The data transmission can be performed in subframes randomly selected from among a plurality of the subframes from which the first subframes and the second subframes are excluded.

The first threshold value can be forwarded to the V2X UE via higher layer signaling.

A subframe of which energy is less than the first threshold value and greater than a second threshold value can be preferentially selected from among a plurality of the subframes from which the first subframes and the second subframes are excluded.

The second threshold value may be related to in-band emission.

The measured energy may correspond to RSRP (reference signal received power).

The V2X UE can perform retransmission in a subframe appearing after a predetermined time period from a subframe in which the data transmission is performed.

Although the retransmission is not performed in the subframe appearing after the predetermined time period, the V2X UE can exclude the subframe appearing after the predetermined time period from resource selection.

The predetermined time period may correspond to 100 ms.

If the V2X UE performs resource reselection, the V2X UE may not perform the retransmission in the subframe appearing after the predetermined time period.

If a resource pool is changed, the V2X UE can perform the resource reselection.

If the V2X UE performs the retransmission more than two times, each retransmission can be performed within the maximum m number of subframes.

ADVANTAGEOUS EFFECTS

According to the present invention, a V2X UE is able to effectively avoid a resource having a possibility of collision through a resource exclusion process of two steps.

Effects obtainable from the present invention are non-limited by the above mentioned effect. And, other unmentioned effects can be clearly understood from the following description by those having ordinary skill in the technical field to which the present invention pertains.

DESCRIPTION OF DRAWINGS

The accompanying drawings, which are included to provide a further understanding of the invention and are incorporated in and constitute a part of this specification, illustrate embodiments of the invention and together with the description serve to explain the principles of the invention.

FIG. 1 is a diagram for a structure of a radio frame;
FIG. 2 is a diagram for a resource grid in a downlink slot;
FIG 3 is a diagram for a structure of a downlink subframe;
FIG. 4 is a diagram for a structure of an uplink subframe;
FIG. 5 is a diagram for a configuration of a wireless communication system having multiple antennas;
FIG. 6 is a diagram for a subframe in which a D2D synchronization signal is transmitted;
FIG. 7 is a diagram for explaining relay of a D2D signal;
FIG. 8 is a diagram for an example of a D2D resource pool for D2D communication;
FIG. 9 is a diagram for explaining an SA period;
FIGS. 10 to 14 are diagrams illustrating a method of selecting a resource and a method of indicating a resource according to embodiment of the present invention;
FIG. 15 is a diagram for configurations of a transmitter and a receiver.

BEST MODE

MODE FOR INVENTION

The embodiments of the present invention described hereinbelow are combinations of elements and features of the present invention. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions or features of any one embodiment may be included in another embodiment and may be replaced with corresponding constructions or features of another embodiment.

In the embodiments of the present invention, a description is made, centering on a data transmission and reception relationship between a Base Station (BS) and a User Equipment (UE). The BS is a terminal node of a network, which communicates directly with a UE. In some cases, a specific operation described as performed by the BS may be performed by an upper node of the BS.

Namely, it is apparent that, in a network comprised of a plurality of network nodes including a BS, various operations performed for communication with a UE may be performed by the BS or network nodes other than the BS. The term 'BS' may be replaced with the term 'fixed station', 'Node B', 'evolved Node B (eNode B or eNB)', 'Access Point (AP)', etc. The term 'relay' may be replaced with the term 'Relay Node (RN)' or 'Relay Station (RS)'. The term 'terminal' may be replaced with the term 'UE', 'Mobile Station (MS)', 'Mobile Subscriber Station (MSS)', 'Subscriber Station (SS)', etc.

The term "cell", as used herein, may be applied to transmission and reception points such as a base station (eNB), sector, remote radio head (RRH) and relay, and may also be extensively used by a specific transmission/reception point to distinguish between component carriers.

Specific terms used for the embodiments of the present invention are provided to help the understanding of the present invention. These specific terms may be replaced with other terms within the scope of the present invention.

In some cases, to prevent the concept of the present invention from being ambiguous, structures and apparatuses of the known art will be omitted, or will be shown in the form of a block diagram based on main functions of each structure and apparatus. Also, wherever possible, the same reference numbers will be used throughout the drawings and the specification to refer to the same or like parts.

The embodiments of the present invention can be supported by standard documents disclosed for at least one of wireless access systems, Institute of Electrical and Electronics Engineers (IEEE) 802, 3rd Generation Partnership Project (3GPP), 3GPP Long Term Evolution (3GPP LTE), LTE-Advanced (LTE-A), and 3GPP2. Steps or parts that are not described to clarify the technical features of the present invention can be supported by those documents. Further, all terms as set forth herein can be explained by the standard documents.

Techniques described herein can be used in various wireless access systems such as Code Division Multiple Access (CDMA), Frequency Division Multiple Access (FDMA), Time Division Multiple Access (TDMA), Orthogonal Frequency Division Multiple Access (OFDMA), Single Carrier-Frequency Division Multiple Access (SC-FDMA), etc. CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, Evolved-UTRA (E-UTRA) etc. UTRA is a part of Universal Mobile Telecommunications System (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. WiMAX can be described by the IEEE 802.16e standard (Wireless Metropolitan Area Network (WirelessMAN)-OFDMA Reference System) and the IEEE 802.16m standard (WirelessMAN-OFDMA Advanced System). For clarity, this application focuses on the 3GPP LTE and LTE-A systems. However, the technical features of the present invention are not limited thereto.

## LTE/LTE-A resource structure/channel

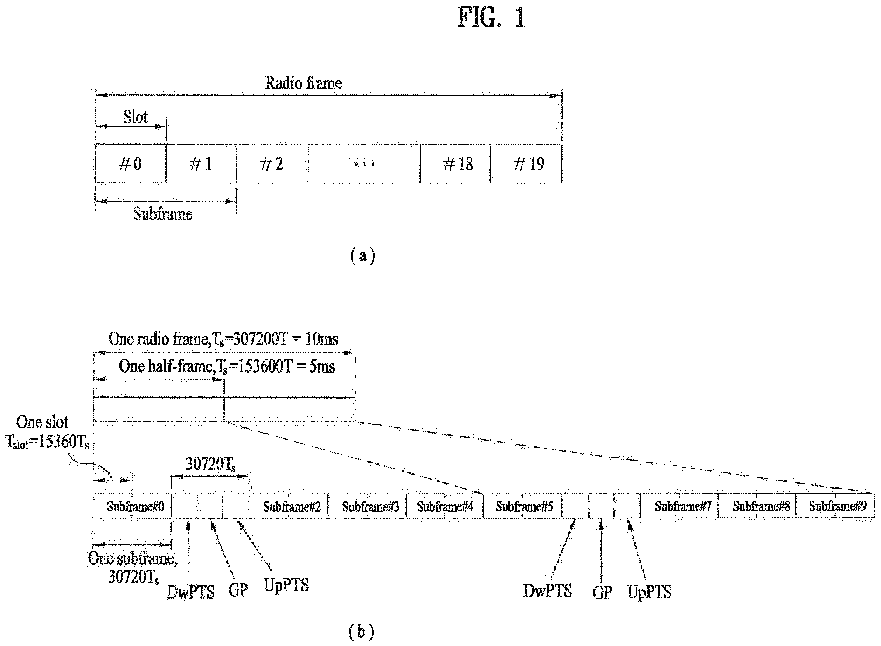

With reference to FIG. 1, the structure of a radio frame will be described below.

In a cellular Orthogonal Frequency Division Multiplexing (OFDM) wireless Packet communication system, uplink and/or downlink data Packets are transmitted in subframes. One subframe is defined as a predetermined time period including a plurality of OFDM symbols. The 3GPP LTE standard supports a type-1 radio frame structure applicable to Frequency Division Duplex (FDD) and a type-2 radio frame structure applicable to Time Division Duplex (TDD).

FIG. 1(a) illustrates the type-1 radio frame structure. A downlink radio frame is divided into 10 subframes. Each subframe is further divided into two slots in the time domain. A unit time during which one subframe is transmitted is defined as a Transmission Time Interval (TTI). For example, one subframe may be 1ms in duration and one slot may be 0.5ms in duration. A slot includes a plurality of OFDM symbols in the time domain and a plurality of Resource Blocks (RBs) in the frequency domain. Because the 3GPP LTE system adopts OFDMA for downlink, an OFDM symbol represents one symbol period. An OFDM symbol may be referred to as an SC-FDMA symbol or symbol period. An RB is a resource allocation unit including a plurality of contiguous subcarriers in a slot.

The number of OFDM symbols in one slot may vary depending on a Cyclic Prefix (CP) configuration. There are two types of CPs: extended CP and normal CP. In the case of the normal CP, one slot includes 7 OFDM symbols. In the case of the extended CP, the length of one OFDM symbol is increased and thus the number of OFDM symbols in a slot is smaller than in the case of the normal CP. Thus when the extended CP is used, for example, 6 OFDM symbols may be included in one slot. If channel state gets poor, for example, during fast movement of a UE, the extended CP may be used to further decrease Inter-Symbol Interference (ISI).

In the case of the normal CP, one subframe includes 14 OFDM symbols because one slot includes 7 OFDM symbols. The first two or three OFDM symbols of each subframe may be allocated to a Physical Downlink Control CHannel (PDCCH) and the other OFDM symbols may be allocated to a Physical Downlink Shared Channel (PDSCH).

FIG. 1(b) illustrates the type-2 radio frame structure. A type-2 radio frame includes two half frames, each having 5 subframes, a Downlink Pilot Time Slot (DwPTS), a Guard Period (GP), and an Uplink Pilot Time Slot (UpPTS). Each subframe is divided into two slots. The DwPTS is used for initial cell search, synchronization, or channel estimation at a UE. The UpPTS is used for channel estimation and acquisition of uplink transmission synchronization to a UE at an eNB. The GP is a period between an uplink and a downlink, which eliminates uplink interference caused by multipath delay of a downlink signal. One subframe includes two slots irrespective of the type of a radio frame.

The above-described radio frame structures are purely exemplary and thus it is to be noted that the number of subframes in a radio frame, the number of slots in a subframe, or the number of symbols in a slot may vary.

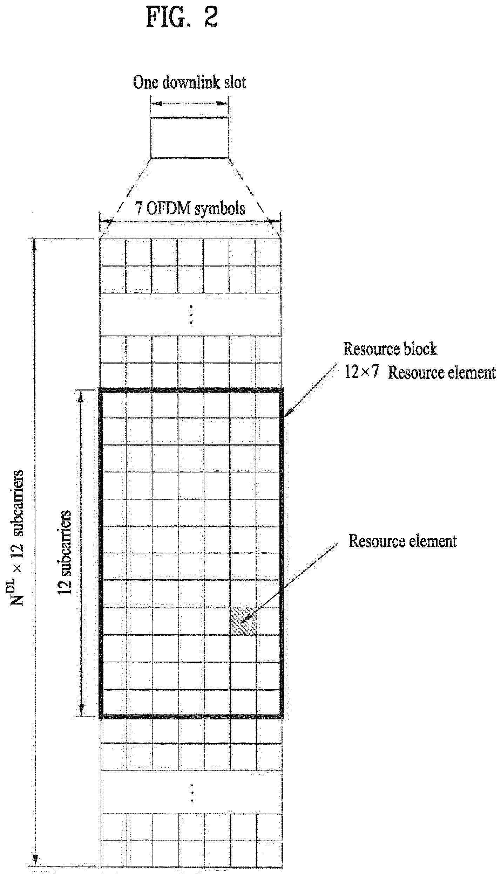

FIG. 2 illustrates the structure of a downlink resource grid for the duration of one downlink slot. A downlink slot includes 7 OFDM symbols in the time domain and an RB includes 12 subcarriers in the frequency domain, which does not limit the scope of the present invention. For example, a downlink slot may include 7 OFDM symbols in the case of the normal CP, whereas a downlink slot may include 6 OFDM symbols in the case of the extended CP. Each element of the resource grid is referred to as a Resource Element (RE). An RB includes 12x7 REs. The number of RBs in a downlink slot, NDL depends on a downlink transmission bandwidth. An uplink slot may have the same structure as a downlink slot.

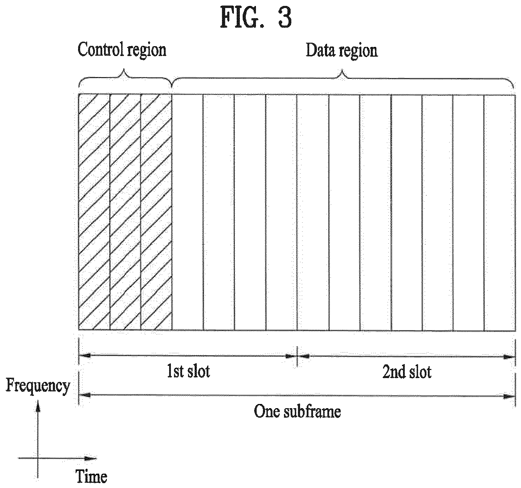

FIG. 3 illustrates the structure of a downlink subframe. Up to three OFDM symbols at the start of the first slot in a downlink subframe are used for a control region to which control channels are allocated and the other OFDM symbols of the downlink subframe are used for a data region to which a PDSCH is allocated. Downlink control channels used in the 3GPP LTE system include a Physical Control Format Indicator CHannel (PCFICH), a Physical Downlink Control CHannel (PDCCH), and a Physical Hybrid automatic repeat request (HARQ) Indicator CHannel (PHICH). The PCFICH is located in the first OFDM symbol of a subframe, carrying information about the number of OFDM symbols used for transmission of control channels in the subframe. The PHICH delivers an HARQ ACKnowledgment/Negative ACKnowledgment (ACK/NACK) signal in response to an uplink transmission. Control information carried on the PDCCH is called Downlink Control Information (DCI). The DCI transports uplink or downlink scheduling information, or uplink transmission power control commands for UE groups. The PDCCH delivers information about resource allocation and a transport format for a Downlink Shared CHannel (DL-SCH), resource allocation information about an Uplink Shared CHannel (UL-SCH), paging information of a Paging CHannel (PCH), system information on the DL-SCH, information about resource allocation for a higher-layer control message such as a Random Access Response transmitted on the PDSCH, a set of transmission power control commands for individual UEs of a UE group, transmission power control information, Voice Over Internet Protocol (VoIP) activation information, etc. A plurality of PDCCHs may be transmitted in the control region. A UE may monitor a plurality of PDCCHs. A PDCCH is formed by aggregating one or more consecutive Control Channel Elements (CCEs). A CCE is a logical allocation unit used to provide a PDCCH at a coding rate based on the state of a radio channel. A CCE includes a plurality of RE groups. The format of a PDCCH and the number of available bits for the PDCCH are determined according to the correlation between the number of CCEs and a coding rate provided by the CCEs. An eNB determines the PDCCH format according to DCI transmitted to a UE and adds a Cyclic Redundancy Check (CRC) to control information. The CRC is masked by an Identifier (ID) known as a Radio Network Temporary Identifier (RNTI) according to the owner or usage of the PDCCH. If the PDCCH is directed to a specific UE, its CRC may be masked by a cell-RNTI (C-RNTI) of the UE. If the PDCCH is for a paging message, the CRC of the PDCCH may be masked by a Paging Indicator Identifier (P-RNTI). If the PDCCH carries system information, particularly, a System Information Block (SIB), its CRC may be masked by a system information ID and a System Information RNTI (SI-RNTI). To indicate that the PDCCH carries a Random Access Response in response to a Random Access Preamble transmitted by a UE, its CRC may be masked by a Random Access-RNTI (RA-RNTI).

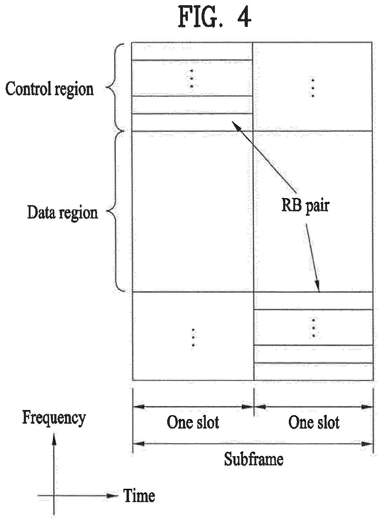

FIG. 4 illustrates the structure of an uplink subframe. An uplink subframe may be divided into a control region and a data region in the frequency domain. A Physical Uplink Control CHannel (PUCCH) carrying uplink control information is allocated to the control region and a Physical Uplink Shared Channel (PUSCH) carrying user data is allocated to the data region. To maintain the property of a single carrier, a UE does not transmit a PUSCH and a PUCCH simultaneously. A PUCCH for a UE is allocated to an RB pair in a subframe. The RBs of the RB pair occupy different subcarriers in two slots. Thus it is said that the RB pair allocated to the PUCCH is frequency-hopped over a slot boundary.

## Reference Signals (RSs)

In a wireless communication system, a Packet is transmitted on a radio channel. In view of the nature of the radio channel, the Packet may be distorted during the transmission. To receive the signal successfully, a receiver should compensate for the distortion of the received signal using channel information. Generally, to enable the receiver to acquire the channel information, a transmitter transmits a signal known to both the transmitter and the receiver and the receiver acquires knowledge of channel information based on the distortion of the signal received on the radio channel. This signal is called a pilot signal or an RS.

In the case of data transmission and reception through multiple antennas, knowledge of channel states between Transmission (Tx) antennas and Reception (Rx) antennas is required for successful signal reception. Accordingly, an RS should be transmitted through each Tx antenna.

RSs may be divided into downlink RSs and uplink RSs. In the current LTE system, the uplink RSs include:

i) DeModulation-Reference Signal (DM-RS) used for channel estimation for coherent demodulation of information delivered on a PUSCH and a PUCCH; and
ii) Sounding Reference Signal (SRS) used for an eNB or a network to measure the quality of an uplink channel in a different frequency.

The downlink RSs are categorized into:

i) Cell-specific Reference Signal (CRS) shared among all UEs of a cell;
ii) UE-specific RS dedicated to a specific UE;
iii) DM-RS used for coherent demodulation of a PDSCH, when the PDSCH is transmitted;
iv) Channel State Information-Reference Signal (CSI-RS) carrying CSI, when downlink DM-RSs are transmitted;
v) Multimedia Broadcast Single Frequency Network (MBSFN) RS used for coherent demodulation of a signal transmitted in MBSFN mode; and
vi) positioning RS used to estimate geographical position information about a UE.

RSs may also be divided into two types according to their purposes: RS for channel information acquisition and RS for data demodulation. Since its purpose lies in that a UE acquires downlink channel information, the former should be transmitted in a broad band and received even by a UE that does not receive downlink data in a specific subframe. This RS is also used in a situation like handover. The latter is an RS that an eNB transmits along with downlink data in specific resources. A UE can demodulate the data by measuring a channel using the RS. This RS should be transmitted in a data transmission area.

### Modeling of MIMO System

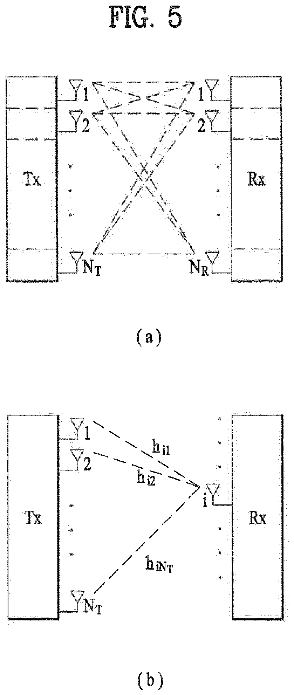

FIG. 5 is a diagram illustrating a configuration of a wireless communication system having multiple antennas.

As shown in FIG. 5(a), if the number of transmit antennas is increased to NT and the number of receive antennas is increased to NR, a theoretical channel transmission capacity is increased in proportion to the number of antennas, unlike the case where a plurality of antennas is used in only a transmitter or a receiver. Accordingly, it is possible to improve a transfer rate and to remarkably improve frequency efficiency. As the channel transmission capacity is increased, the transfer rate may be theoretically increased by a product of a maximum transfer rate Ro upon utilization of a single antenna and a rate increase ratio Ri.

$$[\text{Equation 1}]$$

$$R_i = \min\left(N_T, N_R\right)$$

For instance, in an MIMO communication system, which uses 4 transmit antennas and 4 receive antennas, a transmission rate 4 times higher than that of a single antenna system can be obtained. Since this theoretical capacity increase of the MIMO system has been proved in the middle of 90's, many ongoing efforts are made to various techniques to substantially improve a data transmission rate. In addition, these techniques are already adopted in part as standards for various wireless communications such as 3G mobile communication, next generation wireless LAN and the like.

The trends for the MIMO relevant studies are explained as follows. First of all, many ongoing efforts are made in various aspects to develop and research information theory study relevant to MIMO communication capacity calculations and the like in various channel configurations and multiple access environments, radio channel measurement and model derivation study for MIMO systems, spatiotemporal signal processing technique study for transmission reliability enhancement and transmission rate improvement and the like.

In order to explain a communicating method in an MIMO system in detail, mathematical modeling can be represented as follows. It is assumed that there are NT transmit antennas and NR receive antennas.

Regarding a transmitted signal, if there are NT transmit antennas, the maximum number of pieces of information that can be transmitted is NT. Hence, the transmission information can be represented as shown in Equation 2.

[Equation 2]

$$\mathbf{s} = \begin{bmatrix} s_1, s_2, \cdots, s_{N_T} \end{bmatrix}^T$$

Meanwhile, transmit powers can be set different from each other for individual pieces of transmission information $s_1, s_2,...,s_{N_T}$, respectively. If the transmit powers are set to $P_1, P_2,..., P_{N_T}$, respectively, the transmission information with adjusted transmit powers can be represented as Equation 3.

[Equation 3]

$$\hat{\mathbf{s}} = \begin{bmatrix} \hat{s}_1, \hat{s}_2, \cdots, \hat{s}_{N_T} \end{bmatrix}^T = \begin{bmatrix} P_1 s_1, P_2 s_2, \cdots, P_{N_T} s_{N_T} \end{bmatrix}^T$$

In addition, $\hat{s}$ can be represented as Equation 4 using diagonal matrix $P$ of the transmission power.

[Equation 4]

$$\hat{\mathbf{s}} = \begin{bmatrix} P_1 & & & 0 \\ & P_2 & & \\ & & \ddots & \\ 0 & & & P_{N_T} \end{bmatrix} \begin{bmatrix} s_1 \\ s_2 \\ \vdots \\ s_{N_T} \end{bmatrix} = \mathbf{Ps}$$

Assuming a case of configuring NT transmitted signals $X_1, X_2, \cdots, X_{N_T}$ which are actually transmitted, by applying weight matrix **W** to the information vector $\hat{s}$ having the adjusted transmit powers, the weight matrix **W** serves to appropriately distribute the transmission information to each antenna according to a transport channel state. $X_1, X_2,..., X_{N_T}$ can be expressed by using the vector **X** as follows.

[Equation 5]

$$\mathbf{X} = \begin{bmatrix} x_1 \\ x_2 \\ \vdots \\ x_i \\ \vdots \\ x_{N_T} \end{bmatrix} = \begin{bmatrix} w_{11} & w_{12} & \cdots & w_{1N_T} \\ w_{21} & w_{22} & \cdots & w_{2N_T} \\ \vdots & & \ddots & \\ w_{i1} & w_{i2} & \cdots & w_{iN_T} \\ \vdots & & \ddots & \\ w_{N_T 1} & w_{N_T 2} & \cdots & w_{N_T N_T} \end{bmatrix} \begin{bmatrix} \hat{s}_1 \\ \hat{s}_2 \\ \vdots \\ \hat{s}_j \\ \vdots \\ \hat{s}_{N_T} \end{bmatrix} = \mathbf{W}\hat{\mathbf{s}} = \mathbf{WPs}$$

In Equation 5, $W_{ij}$ denotes a weight between an $i^{th}$ transmit antenna and $j^{th}$ information. **W** is also called a precoding matrix.

If the NR receive antennas are present, respective received signals $y_1, y_2,...y_{N_R}$ of the antennas can be expressed as follows.

[Equation 6]

$$\mathbf{y} = \begin{bmatrix} y_1, y_2, \cdots, y_{N_R} \end{bmatrix}^{\mathrm{T}}$$

If channels are modeled in the MIMO wireless communication system, the channels may be distinguished according to transmit/receive antenna indexes. A channel from the transmit antenna j to the receive antenna i is denoted by $h_{ij}$. In $h_{ij}$, it is noted that the indexes of the receive antennas precede the indexes of the transmit antennas in view of the order of indexes.

FIG. 5(b) is a diagram illustrating channels from the NT transmit antennas to the receive antenna i. The channels may be combined and expressed in the form of a vector and a matrix. In FIG. 5(b), the channels from the NT transmit antennas to the receive antenna i can be expressed as follows.

[Equation 7]

$$\mathbf{h}_i^T = \begin{bmatrix} h_{i1}, h_{i2}, \cdots, h_{iN_T} \end{bmatrix}$$

Accordingly, all channels from the NT transmit antennas to the NR receive antennas can be expressed as follows.

[Equation 8]

$$\mathbf{H} = \begin{bmatrix} \mathbf{h}_1^T \\ \mathbf{h}_2^T \\ \vdots \\ \mathbf{h}_i^T \\ \vdots \\ \mathbf{h}_{N_R}^T \end{bmatrix} = \begin{bmatrix} h_{11} & h_{12} & \cdots & h_{1N_T} \\ h_{21} & h_{22} & \cdots & h_{2N_T} \\ \vdots & & \ddots & \\ h_{i1} & h_{i2} & \cdots & h_{iN_T} \\ \vdots & & \ddots & \\ h_{N_R 1} & h_{N_R 2} & \cdots & h_{N_R N_T} \end{bmatrix}$$

An AWGN (Additive White Gaussian Noise) is added to the actual channels after a channel matrix **H**. The AWGN $n_1, n_2, \ldots, n_{N_R}$ respectively added to the NR receive antennas can be expressed as follows.

[Equation 9]

$$\mathbf{n} = \begin{bmatrix} n_1, n_2, \cdots, n_{N_R} \end{bmatrix}^{\mathrm{T}}$$

Through the above-described mathematical modeling, the received signals can be expressed as follows.

[Equation 10]

$$\mathbf{y} = \begin{bmatrix} y_1 \\ y_2 \\ \vdots \\ y_i \\ \vdots \\ y_{N_R} \end{bmatrix} = \begin{bmatrix} h_{11} & h_{12} & \cdots & h_{1N_T} \\ h_{21} & h_{22} & \cdots & h_{2N_T} \\ \vdots & & \ddots & \\ h_{i1} & h_{i2} & \cdots & h_{iN_T} \\ \vdots & & \ddots & \\ h_{N_R 1} & h_{N_R 2} & \cdots & h_{N_R N_T} \end{bmatrix} \begin{bmatrix} x_1 \\ x_2 \\ \vdots \\ x_j \\ \vdots \\ x_{N_T} \end{bmatrix} + \begin{bmatrix} n_1 \\ n_2 \\ \vdots \\ n_i \\ \vdots \\ n_{N_R} \end{bmatrix} = \mathbf{Hx} + \mathbf{n}$$

Meanwhile, the number of rows and columns of the channel matrix **H** indicating the channel state is determined by the number of transmit and receive antennas. The number of rows of the channel matrix **H** is equal to the number NR of receive antennas and the number of columns thereof is equal to the number NR of transmit antennas. That is, the channel matrix **H** is an NR×NT matrix.

The rank of the matrix is defined by the smaller of the number of rows and the number of columns, which are independent from each other. Accordingly, the rank of the matrix is not greater than the number of rows or columns. The rank *rank*(H) of the channel matrix **H** is restricted as follows.

[Equation 11]

$$rank(\mathbf{H}) \leq \min(N_T, N_R)$$

Additionally, the rank of a matrix can also be defined as the number of non-zero Eigen values when the matrix is Eigen-value-decomposed. Similarly, the rank of a matrix can be defined as the number of non-zero singular values when the matrix is singular-value-decomposed. Accordingly, the physical meaning of the rank of a channel matrix can be the maximum number of channels through which different pieces of information can be transmitted.

In the description of the present document, 'rank' for MIMO transmission indicates the number of paths capable of sending signals independently on specific time and frequency resources and 'number of layers' indicates the number of signal streams transmitted through the respective paths. Generally, since a transmitting end transmits the number of layers corresponding to the rank number, one rank has the same meaning of the layer number unless mentioned specially.

**Synchronization Acquisition of D2D UE**

Now, a description will be given of synchronization acquisition between UEs in D2D communication based on the foregoing description in the context of the legacy LTE/LTE-A system. In an OFDM system, if time/frequency synchronization is not acquired, the resulting Inter-Cell Interference (ICI) may make it impossible to multiplex different UEs in an OFDM signal. If each individual D2D UE acquires synchronization by transmitting and receiving a synchronization signal directly, this is inefficient. In a distributed node system such as a D2D communication system, therefore, a specific node may transmit a representative synchronization signal and the other UEs may acquire synchronization using the representative synchronization signal. In other words, some nodes (which may be an eNB, a UE, and a Synchronization Reference Node (SRN, also referred to as a synchronization source)) may transmit a D2D Synchronization Signal (D2DSS) and the remaining UEs may transmit and receive signals in synchronization with the D2DSS.

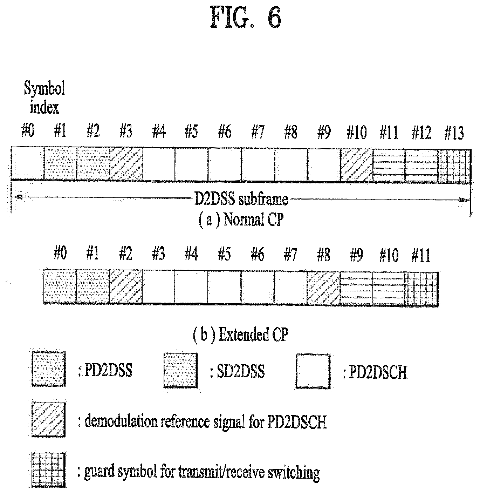

D2DSSs may include a Primary D2DSS (PD2DSS) or a Primary Sidelink Synchronization Signal (PSSS) and a Secondary D2DSS (SD2DSS) or a Secondary Sidelink Synchronization Signal (SSSS). The PD2DSS may be configured to have a similar/modified/repeated structure of a Zadoff-chu sequence of a predetermined length or a Primary Synchronization Signal (PSS). Unlike a DL PSS, the PD2DSS may use a different Zadoff-chu root index (e.g., 26, 37). And, the SD2DSS may be configured to have a similar/modified/repeated structure of an M-sequence or a Secondary Synchronization Signal (SSS). If UEs synchronize their timing with an eNB, the eNB serves as an SRN and the D2DSS is a PSS/SSS. Unlike PSS/SSS of DL, the PD2DSS/SD2DSS follows UL subcarrier mapping scheme. FIG. 6 shows a subframe in which a D2D synchronization signal is transmitted. A Physical D2D Synchronization Channel (PD2DSCH) may be a (broadcast) channel carrying basic (system) information that a UE should first obtain before D2D signal transmission and reception (e.g., D2DSS-related information, a Duplex Mode (DM), a TDD UL/DL configuration, a resource pool-related information, the type of an application related to the D2DSS, etc.). The PD2DSCH may be transmitted in the same subframe as the D2DSS or in a subframe subsequent to the frame carrying the D2DSS. A DMRS can be used to demodulate the PD2DSCH.

The SRN may be a node that transmits a D2DSS and a PD2DSCH. The D2DSS may be a specific sequence and the PD2DSCH may be a sequence representing specific information or a codeword produced by predetermined channel coding. The SRN may be an eNB or a specific D2D UE. In the case of partial network coverage or out of network coverage, the SRN may be a UE.

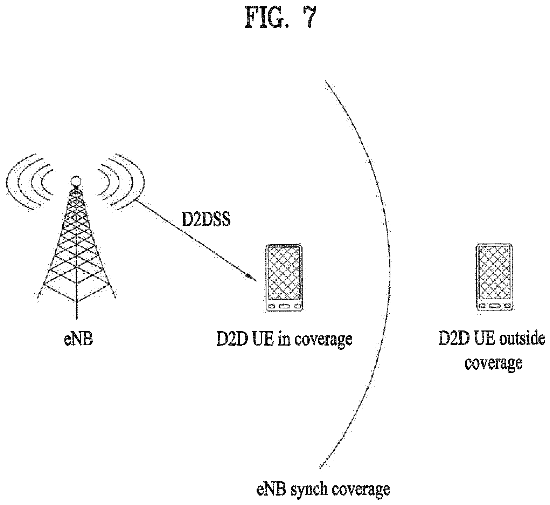

In a situation illustrated in FIG. 7, a D2DSS may be relayed for D2D communication with an out-of-coverage UE. The D2DSS may be relayed over multiple hops. The following description is given with the appreciation that relay of an SS covers transmission of a D2DSS in a separate format according to a SS reception time as well as direct Amplify-and-Forward (AF)-relay of an SS transmitted by an eNB. As the D2DSS is relayed, an in-coverage UE may communicate directly with an out-of-coverage UE.

## D2D resource pool

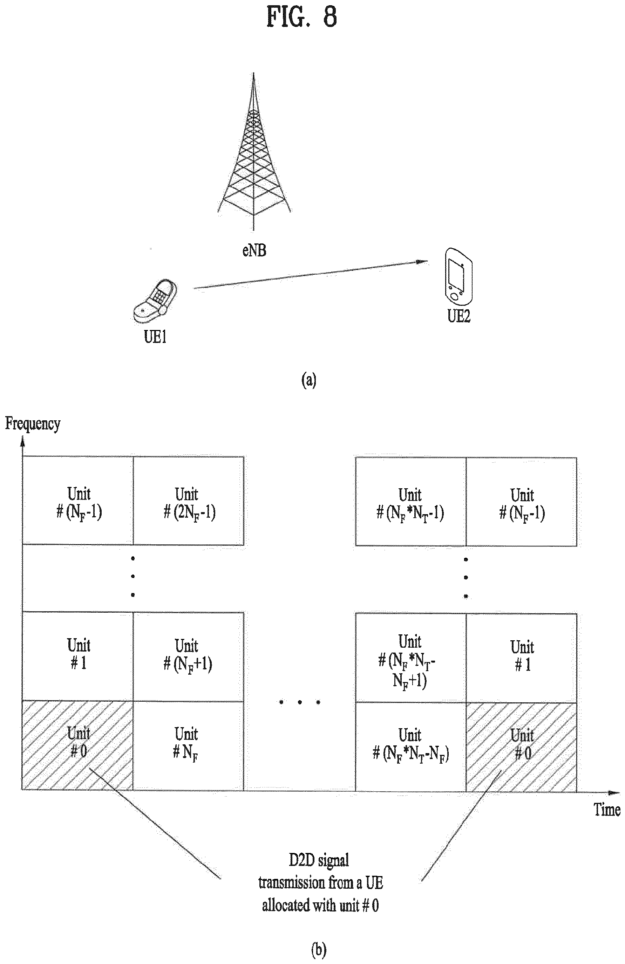

FIG. 8 shows an example of a UE1, a UE2 and a resource pool used by the UE1 and the UE2 performing D2D communication. In FIG. 8 (a), a UE corresponds to a terminal or such a network device as an eNB transmitting and receiving a signal according to a D2D communication scheme. A UE selects a resource unit corresponding to a specific resource from a resource pool corresponding to a set of resources and the UE transmits a D2D signal using the selected resource unit. A UE2 corresponding to a reception UE receives a configuration of a resource pool in which the UE1 is able to transmit a signal and detects a signal of the UE1 in the resource pool. In this case, if the UE1 is located at the inside of coverage of an eNB, the eNB can inform the UE1 of the resource pool. If the UE1 is located at the outside of coverage of the eNB, the resource pool can be informed by a different UE or can be determined by a predetermined resource. In general, a resource pool includes a plurality of resource units. A UE selects one or more resource units from among a plurality of the resource units and may be able to use the selected resource unit(s) for D2D signal transmission. FIG. 8 (b) shows an example of configuring a resource unit. Referring to FIG. 8 (b), the entire frequency resources are divided into the $N_F$ number of resource units and the entire time resources are divided into the $N_T$ number of resource units. In particular, it is able to define $N_F*N_T$ number of resource units in total. In particular, a resource pool can be repeated with a period of $N_T$ subframes. Specifically, as shown in FIG. 8, one resource unit may periodically and repeatedly appear. Or, an index of a physical resource unit to which a logical resource unit is mapped may change with a predetermined pattern according to time to obtain a diversity gain in time domain and/or frequency domain. In this resource unit structure, a resource pool may correspond to a set of resource units capable of being used by a UE intending to transmit a D2D signal.

A resource pool can be classified into various types. First of all, the resource pool can be classified according to contents of a D2D signal transmitted via each resource pool. For example, the contents of the D2D signal can be classified into various signals and a separate resource pool can be configured according to each of the contents. The contents of the D2D signal may include SA (scheduling assignment), a D2D data channel, and a discovery channel. The SA may correspond to a signal including information on a resource position of a D2D data channel, information on MCS (modulation and coding scheme) necessary for modulating and demodulating a data channel, information on a MIMO transmission scheme, information on TA (timing advance), and the like. The SA signal can be transmitted on an identical resource unit in a manner of being multiplexed with D2D data. In this case, an SA resource pool may correspond to a pool of resources that an SA and D2D data are transmitted in a manner of being multiplexed. The SA signal can also be referred to as a D2D control channel or a PSCCH (physical sidelink control channel). The D2D data channel (or, PSSCH (physical sidelink shared channel)) corresponds to a resource pool used by a transmission UE to transmit user data. If an SA and a D2D data are transmitted in a manner of being multiplexed in an identical resource unit, D2D data channel except SA information can be transmitted only in a resource pool for the D2D data channel. In other word, resource elements (REs), which are used to transmit SA information in a specific resource unit of an SA resource pool, can also be used for transmitting D2D data in a D2D data channel resource pool. The discovery channel may correspond to a resource pool for a message that enables a neighboring UE to discover transmission UE transmitting information such as ID of the UE, and the like.

Although contents of D2D signal are identical to each other, it may use a different resource pool according to a transmission/reception attribute of the D2D signal. For example, in case of the same D2D data channel or the same discovery message, the D2D data channel or the discovery signal can be classified into a different resource pool according to a transmission timing determination scheme (e.g., whether a D2D signal is transmitted at the time of receiving a synchronization reference signal or the timing to which a prescribed timing advance is added) of a D2D signal, a resource allocation scheme (e.g., whether a transmission resource of an individual signal is designated by an eNB or an individual transmission UE selects an individual signal transmission resource from a pool), a signal format (e.g., number of symbols occupied by a D2D signal in a subframe, number of subframes used for transmitting a D2D signal), signal strength from an eNB, strength of transmit power of a D2D UE, and the like. For clarity, a method for an eNB to directly designate a transmission resource of a D2D transmission UE is referred to as a mode 1. If a transmission resource region is configured in advance or an eNB designates the transmission resource region and a UE directly selects a transmission resource from the transmission resource region, it is referred to as a mode 2. In case of performing D2D discovery, if an eNB directly indicates a resource, it is referred to as a type 2. If a UE directly selects a transmission resource from a predetermined resource region or a resource region indicated by the eNB, it is referred to as a type 1.

## Transmission and reception of SA

A mode 1 UE can transmit an SA signal (or, a D2D control signal, SCI (sidelink control information)) via a resource configured by an eNB. A mode 2 UE receives a configured resource to be used for D2D transmission. The mode 2 UE can transmit SA by selecting a time frequency resource from the configured resource.

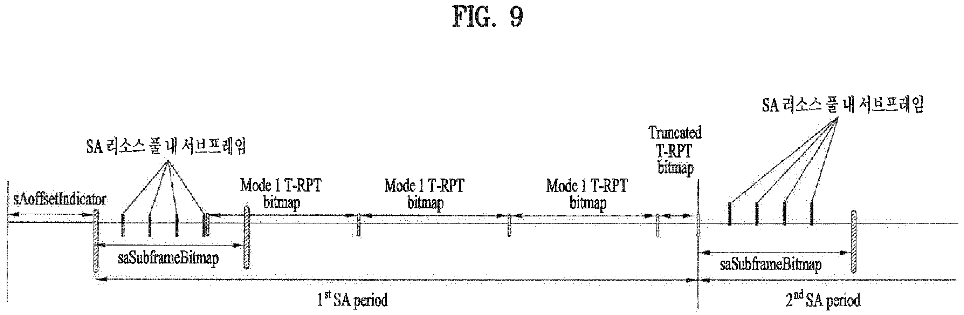

The SA period can be defined as FIG. 9. Referring to FIG. 9, a first SA period can start at a subframe apart from a specific system frame as much as a prescribed offset (SAOffsetIndicator) indicated by higher layer signaling. Each SA period can include an SA resource pool and a subframe pool for transmitting D2D data. The SA resource pool can include subframes ranging from a first subframe of an SA period to the last subframe among subframes indicated by a subframe bitmap (saSubframeBitmap) to transmit SA. In case of mode 1, T-RPT (time-resource pattern for transmission) is applied to the resource pool for transmitting D2D data to determine a subframe in which an actual data is transmitted. As shown in the drawing, if the number of subframes included in an SA period except the SA resource pool is greater than the number of T-RPT bits, the T-RPT can be repeatedly applied and the lastly applied T-RPT can be applied in a manner of being truncated as many as the number of remaining subframes. A transmission terminal performs transmission at a position of which a T-RPT bitmap corresponds to 1 in an indicated T-RPT. One MAC PDU performs transmission four times.

In the following, a method of selecting a resource for performing transmission, a method of indicating a resource for performing transmission, and the like in V2V (vehicle to vehicle) communication and D2D (device to device) communication are described

## Selection of resource for performing transmission

According to a data transmission method in accordance with one embodiment of the present invention, a UE excludes first subframes in which transmission performed by a different UE rather than the UE is anticipated. If measured energy is equal to or greater than a first threshold value in second subframes, the second subframes are excluded from among a plurality of subframes from which the first subframes are excluded. After the abovementioned exclusion procedure is performed, the UE can perform data transmission in at least a part of a plurality of the subframes from which the first subframes and the second subframes are excluded. The data transmission can be performed in subframes randomly selected from among a plurality of the subframes from which the first subframes and the second subframes are excluded.

In this case, the first subframes can be excluded based on SA. For example, a UE firstly excludes a resource position read via SA of a different UE from a resource region where there is a chance to perform a transmission. And, a resource is randomly selected (to mitigate In-Band Emission (IBE) and half duplex constraint) from among resources of which energy measured from resources from which the first subframes are excluded is equal to or greater than a prescribed threshold (i.e., subframes from which second subframes are excluded). Since a UE is able to know a resource position used/to be used by a different UE for transmission via SA, the UE selects a resource after a resource used by the different UE is excluded based on SA. Yet, if there is a half-duplex constraint between SAs, it may fail to decode all SAs within a prescribed region. In particular, if detected energy of data is equal to or greater than a prescribed threshold, the data may correspond to a packet which has failed to decode SA. Or, although SA is decoded, it may correspond to a case that signal strength is not strong. In particular, when decoding is performed on SA, if reception power detected from a data resource indicated by the SA and a corresponding data resource is equal to or greater than a prescribed threshold, it is preferable to exclude the data resource from transmission resources. In addition, if energy of SA and/or data is equal to or greater than a prescribed threshold, it may correspond to a case that the SA is not decoded or a case that the data is received with strong power due to a position change of a UE although the SA is not decoded. Hence, a resource is excluded when the energy of the data resource is equal to or greater than a prescribed threshold. In this case, a threshold value (unavailable resource) of an energy level of data and/or SA can be determined in advance or can be signaled to a UE by a network via physical layer signaling or higher layer signaling.

A subframe of which energy is less than a first threshold value and greater than a second threshold value can be preferentially selected from among subframes from which first subframes and second subframes are excluded in a plurality of subframes. The second threshold value may correspond to a value related to in-band emission. A threshold value for reducing IBE and a threshold value for determining whether or not a specific resource is occupied by a different UE can be additionally determined in advance or can be signaled by a network via physical layer signaling or higher layer signaling. It may consider a method that a data resource indicated by SA is excluded after SA decoding, a resource of which energy is equal to or greater than a first threshold value is additionally excluded, and a resource of which energy is less than the first threshold value and is equal to or greater than a second threshold value is preferentially selected. The first threshold value is used to exclude an unrecognized resource due to the failure of SA decoding and the second threshold value is used to preferentially select a subframe used by a nearby UE to reduce IBE. If there is no resource satisfying the abovementioned condition, a resource can be randomly selected from among subframes from which the first subframes are excluded only. If all resources are excluded from a corresponding resource region (period) through the abovementioned subframe exclusion method, it may be able to configure a transmission to be abandoned in the resource region. Or, it may wait for until a next resource region (period). The configuration can be applied when SA or data is transmitted.

Meanwhile, a UE can perform retransmission in a subframe appearing after a predetermined time section (e.g., 100 ms) from a subframe in which data is transmitted. This process can be performed via resource reservation of V2X.

Although retransmission is not performed in the subframe appearing after the predetermined time section, the UE can exclude the subframe appearing after the predetermined time section from resource selection. For example, when the UE performs resource reselection, the UE may not perform retransmission in the subframe appearing after the predetermined time section. In particular, when the UE does not use a previously used resource by performing resource reselection via SA decoding or energy sensing, it may be able to determine a rule that the previously used resource or a resource belonging to time at which the resource is transmitted is not selected. Since the UE is unable to perform sensing in a resource in which the UE performs transmission, the UE is unable to know a sensing result of the resource. Hence, the resource is excluded from resource selection. In particular, the UE does not select a resource until a sensing result of the resource is known to the UE.

If a resource pool is changed, the UE can perform resource reselection. In particular, if a resource region used by the UE is changed, the UE performs resource reselection. Although a resource is previously reserved via a sensing/reservation operation, if the resource region is changes, since interference environment is changed, it is necessary for the UE to perform resource reselection. In this case, the sensing can be performed in the same resource region. For example, when the UE uses a resource region A, if the resource region A is changed to a resource region B, the UE may use a sensing result sensed within the resource region B. Or, since the sensing result sensed in the resource region B is going to be inaccurate as time goes by, if a resource region is changed, the UE can perform resource selection by selecting a random resource or sensing a partial section without a sensing result. This is aimed for reducing delay time due to sensing when a resource region is changed, sensing time is not sufficient, and a resource is initially reselected. In the same context, resource reselection can also be performed when a synchronization source is changed. For example, if GNSS (global navigation satellite system)-based synchronization is changed to eNB-based synchronization, since a resource region is configured at different timing in accordance with the eNB-based synchronization, this can be regarded as reselection of a resource region and resource reselection can be triggered. When a synchronization source is changed, resource reselection can be performed only when a difference between the changed synchronization source and a previous synchronization source exceeds a prescribed threshold or a difference of time domain of a resource region exceeds a prescribed threshold instead of performing the resource reselection all the time. By doing so, it is able to prevent the resource reselection from being frequently performed. And, although a synchronization source is changed, if a time difference is insignificant, it may be able to maintain resource selection.

In relation to the resource reselection, a UE can perform an additional sensing/reservation operation according to a resource region. For example, when a resource region is divided into a resource region A and a resource region B, the UE can perform a sensing/reservation operation in the resource region A and a sensing/reservation operation in the resource region B, respectively. When the UE uses the resource region B while transmitting a message in the resource region A, the UE can perform a transmission resource selection/reselection procedure using a sensing result sensed within the resource region B. In particular, if the UE is positioned at A zone, the UE performs resource selection/reselection using a sensing result sensed in the resource region A. If the UE is positioned at B zone, the UE performs resource selection/reselection using a sensing result sensed in the resource region B. When a reservation operation is performed in the resource region A, the UE can perform the resource reservation operation under the assumption that a resource after X ms is used in the resource region A. If resource reselection is triggered irrespective of a resource region, the UE can perform (counter, collision detection, resource pool reconfiguration) resource reselection operation. For example, when a sensing/reservation operation is performed irrespective of a resource region, if a collision occurs (by a high priority), it may perform resource reselection. According to the present method, although a resource region is changed, separate reselection is not additionally applied. However, if a collision occurs, resource reselection is performed. In the aspect of UE implementation, if it is anticipated that a zone is to be changed, it is able to determine a rule that the UE does not perform reservation. When the UE senses a specific resource region, the UE regards a sensing result of a region rather than a pool to be transmitted by the UE as an invalid sensing result and can reflect the sensing result to resource selection/reselection. This operation can be utilized by a single sensing operation without increasing UE complexity when a plurality of pools exist.

If it is necessary for a UE to perform reselection in the middle of an SPS period (reservation is indicated in a previous period), it may use one of the three methods described in the following. As a first method, it may be able to configure the UE to perform decoding on data by decoding every SA. In particular, although reservation of a resource is indicated in a previous message transmission period, it may not use the reserved resource in the current period. In particular, the reservation is performed for the purpose of anticipating an interference level only. As a second method, if new SA (same ID) is received in the middle of a reservation period, it may be able to determine a rule that the SA is applied to a specific message generation period only. As a third method, if new SA (same ID) is received in the middle of a reservation period, a reservation resource can be renewed in a manner that previous SA is ignored and new SA is indicated.

Meanwhile, when a UE detects SA of a different UE or senses energy and determines that a corresponding resource is occupied, if all UEs perform reselection, since the resource is not used by any UE, efficiency of the resource can be degraded. In order to solve the problem, it may consider methods described in the following.

When a collision is detected (or when timing of performing resource reselection is arrived), it may perform reselection stochastically. In this case, a probability in use can be common to UEs, can be signaled by a network via physical layer signaling or higher layer signaling, or can be differently configured according to a resource pool. Or, the probability can be differently configured according to a type of traffic transmitted by a UE. For example, if a UE transmits an event triggered message, the probability is configured to be low. If the UE transmits a periodic message, reselection is performed with a high probability.

In other word, a reselection probability can be differently configured according to a priority of a packet. For example, when a UE A and a UE B transmit data in the same resource and detect a collision, if the UE A and the UE B have a different priority, a reselection probability can be differently configured according to a difference between priorities. For example, if the priority of the UE A is higher than the priority of the UE B, the UE A configures the reselection probability to be lower than 0.5 and the UE A configures the reselection probability to be higher than 0.5. For example, it can be represented as '0.5 + (priority level of a UE — detected priority level) * alpha' (in this case, the alpha corresponds to a predetermined value or a value configured by a network). In particular, a reselection probability can be determined according to a difference between a priority of a packet transmitted by a UE and a priority of a packet causing a collision. Or, a reselection probability can be determined according to a packet priority of a transmission UE. As a different example, if a collision is detected by a packet of the same priority or a packet of high priority, a reselection probability can be configured by 1. If a collision is detected by a packet of low priority, a reselection probability can be configured by 0. In this case, a specific UE performs reselection only when a collision occurs by a packet having a priority equal to or higher than a priority of the specific UE at a position of a data transmitted by the specific UE. Or, it may be able to determine a rule that the specific UE performs reselection only when a collision occurs by a packet of a priority higher than a priority of the specific UE. If a packet of a priority identical to a priority of the specific UE is detected, the specific UE performs reselection with a prescribed probability. If a collision occurs by a packet of a priority lower than a priority of the specific UE, it may be able to determine a rule that the specific UE does not perform reselection. Or, a resource reselection probability can be differently configured according to a priority level of a packet transmitted by a UE. For example, if a priority of a packet is higher, the UE performs reselection with a lower probability. If a priority of a packet is lower, the UE can perform reselection with a higher probability. By doing so, it may be able to protect a packet of a high priority and can quickly transmit the packet of the high priority. And, it may be able to perform reselection on a packet of a low priority to prevent interference to the high priority.

Meanwhile, when a UE detects a collision with a different UE, the UE can differently determine a reselection probability by comparing an RV (redundancy version) of the different UE with an RV of the UE. For example, if the UE detects a collision due to an RV 0, the UE configures a reselection probability to be higher. If the UE detects a collision due to a different RV, the UE configures a reselection probability to be lower. In particular, similar to a reselection probability differently configured according to a priority, it may be able to differently configure the reselection probability to protect the RV 0 from other RVs. Meanwhile, when a collision is detected by a packet of the same priory or a packet of a higher priority, whether to perform reselection or a reselection probability can be differently configured according to all or a part of a load, a speed, a position, and a heading of a UE. For example, if the load of the UE is low, reselection is performed on the same priority packet. On the contrary, if the load of the UE is high, reselection is performed only when a packet of a high priority is received to prevent occurrence of excessive reselection.

When a collision is determined based on SA decoding, the decoding of the SA means that SA is transmitted in subframes different from each other. In particular, UEs, which have preferentially transmitted SA, can perform reselection. Or, UEs, which have transmitted SA later (in time), can perform reselection. The former method can be performed when UEs transmit SA, reads the SA in a section on which sensing is not performed, and a collision is detected. The stochastic reselection can also be performed in the present method. In particular, if SA at which a collision occurs is transmitted before or after SA transmitted by a UE, a reselection probability is differently configured to prevent a case that all UEs are unable to select a resource. A reselection probability (i.e., a reselection priority) can be differently configured according to a position of a frequency resource in which SA is transmitted. For example, if a collision is detected at a frequency resource index position of SA, it may differently configure a reselection probability. Or, a UE having a lower (or higher) index may preferentially perform reselection. In the latter case, when a collision occurs, a UE of a higher (or lower) index of a frequency resource position can preferentially perform reselection. A method of differently configuring a reselection priority/probability according to a frequency resource may operate in a manner of being combined with the aforementioned method of performing reselection according to a time resource position or a probability.

When a resource is selected after SA of a different UE is detected, if all resources are used by the different UE, a method of selecting a transmission resource is explained in the following. When SA of a different UE is decoded, if all resource regions are used or there is no region to which a packet of a UE is to be transmitted, the UE configures a data resource region indicated by SA of lowest reception power as a usable resource based on the reception power of the SA. This is because when the reception power of the SA is low, the UE is able to reuse a resource used by the UE and reduce mutual interference. Meanwhile, as an extension of the abovementioned method, an associated data resource position where the reception power of the SA becomes less than a prescribed threshold is regarded as a position where a transmission is available and a transmission resource can be selected from the position. This method can be used to prevent the use of the same resource at the same time when a nearby UE performs similar measurement. In particular, instead of selecting a resource of lowest energy, a UE autonomously selects a resource from among resources of energy less than a prescribed energy threshold to prevent the same resource used by a different UE from being selected. When SA of a different UE is decoded, if all resource regions are used or there is no region to which a packet of a UE is to be transmitted, the UE preferentially selects a resource region of a lowest energy among reception power of a data as a transmission resource. According to the present method, not reception power of SA but data reception power in a data region is directly reflected. Hence, it is able to determine more accurate resource use. Similarly, a resource is randomly selected from among resources of which a measured energy level is less than a prescribed threshold instead of using a resource region of a lowest energy. The abovementioned operation can also be applied to a case that SA is decoded and all resources are not used. In particular, decoding is performed on SA, reception power of a data resource indicated by the SA is measured, a resource of which reception power is equal to or greater than a threshold is excluded, and a resource of which energy is less than the threshold is randomly selected from among the remaining resources.

Meanwhile, when a currently used resource is excluded via SA decoding and energy is measured from the remaining data resource to randomly select a resource from among lower X %, if SA decoding indicates that the same resource is not going to be used in a next message transmission period, since high energy of a currently monitoring period is measured from a corresponding data resource, a UE may not select the resource. This is because, since the SA decoding indicates that the current data resource is not going to be used in the next period, although the resource is not excluded, since the high energy is measured, it is highly probable that the resource does not belong to the lower X %. In this case, whenever the UE performs reselection (whenever the SA indicates that the resource of the next period is not used), no UE uses the resource, thereby deteriorating resource efficiency. In order to solve the abovementioned issue, when a UE indicates that a current resource is not used in a next period, energy of a resource used by the UE can be configured by 0, energy less than a prescribed threshold, or energy always included at the time of selecting a final resource (measured energy is randomly configured to be less than X %). By doing so, it may be able to make resource selection to be available all the time by including a corresponding resource in a resource selection candidate. As a different method, when a UE indicates that a current resource is not used in a next period, energy of a resource used by the UE can be calculated by excluding RSRP of a UE currently transmitting a message. For example, when energy of a corresponding data resource is calculated by average energy (RSSI), if it is assumed that a corresponding resource is not used in a next period, it may be able to make high energy not to be detected by performing a calculation while RSRP (average reception power of RS signal) of the resource is excluded (RSSI-RSRP). In the RSRP part (reception power received from a specific UE), since RSSI is different from the number of samples in use, a specific scaling value (RSSI-a*RSRP) can be applied to the RSRP. In this case, the a value may correspond to a predetermined value or a value configured by a network.

In the foregoing description, energy can be measured from energy of a received frequency resource and/or reception power of an RS signal can be measured as energy. For example, reception power of an RS is measured in a symbol in which the RS is transmitted and reception energy is measured in other data symbols. A transmission candidate resource can be configured by applying an individual threshold to two measurement results. The two measurement results can be used by performing weighted sum on the two measurement results. To this end, an energy measurement threshold or an RS reception power threshold can be determined in advance or can be signaled by a network.

When the energy of the SA or the data is measured, it may be able to determine whether or not a transmission resource is available on the basis of an absolute measurement value. In this case, all resources may become available or unavailable. Hence, an operation of measuring energy of SA and/or data and determining an available resource can be performed on the basis of a relative energy level. For example, it may be able to determine a rule that an operation of preferentially excluding a resource of which reception power is upper X % among a resource of which SA reception power is upper X % and a data resource indicated by SA is to be performed. Similar to the aforementioned threshold value for an energy level which is determined in advance or signaled by a network, a relative threshold value (ratio value) can be determined in advance or signaled to a UE by a network via physical layer signaling or higher layer signaling. And, when a UE performs a resource selection operation via sensing, the network can signal an indicator indicating whether the sensing is performed on the basis of an absolute value or a relative value to the UE via physical layer signaling or higher layer signaling. Or, the indication can be set to UEs in advance.

Meanwhile, SA is decoded and a resource to be transmitted is selected based on the decoded SA. In this case, when an upper X % is excluded from a ratio of reception power of the SA, if the X corresponds to 0, a resource can be selected via energy sensing of a data. As mentioned in the foregoing description, the X corresponds to a predetermined value or a value configured by a network. If the abovementioned method is appropriately configured, it may be able to combine a sensing operation via SA decoding with a sensing operation via energy sensing. Meanwhile, since an operation of performing decoding on SA and excluding upper X % from ratios of SA reception power is performed to exclude a data resource interlocked with the SA, it is necessary to directly measure reception power of the data resource indicated by the decoded SA. If the reception power is equal to or greater than a prescribed threshold, the data resource is excluded. If the reception power is less than the threshold, the data resource can be included as an available resource, In particular, whether a resource is selected or excluded can be determined by identifying a data resource interlocked with a decoding result and inducing power property of the data resource from reception power of an SA resource or reception power of the data resource. As an exceptional case, a packet of a high priority (e.g., an event triggered message) can be transmitted by (randomly) selecting a resource without performing the sensing-based resource selection. Having received SA, a UE changes reservation of the UE to select a different resource or drop a transmission. Or, when a UE (e.g., a pedestrian UE (P-UE)) does not perform additional sensing to reduce battery consumption, it may determine a rule that a random resource is selected to perform transmission or a transmission can be performed in a separate resource region for the P-UE only. Or, if a V-UE reads SA of the P-UE, the V-UE can select a resource from resources except resources of the P-UE.

Meanwhile, when a UE performs a plurality of transmissions on a specific packet, it may use a separate sensing method between initial transmission and retransmission of data. For example, when a data is initially transmitted, since the data is transmitted by RV0 and includes many systematic bits, the data can be transmitted with higher importance. When a transmission resource is determined, an initial transmission position can be preferentially excluded after SA of a different UE is detected. For example, if it is determined as all resources are in use after SA is detected, an initial transmission resource is excluded from available transmission resources, a retransmission resource is preferentially selected, and the retransmission resource is utilized as a transmission resource. For example, if all resources are in use, although the initial transmission resource is still excluded from available transmission resources, retransmission resources are regarded as usable resources. A resource of low energy or a resource of low RS reception power is selected from the retransmission resources to perform transmission.

When a UE performs transmission, it may assign a difference between initial transmission and retransmission. For example, when the UE selects an initial transmission resource, it may be able to determine a rule that the UE should select a resource of lowest energy or a resource not occupied by a different UE. On the contrary, when the UE selects a retransmission resource, although the retransmission resource is used by a different UE, the UE can duplicately use the retransmission resource. Or, the UE may select a transmission candidate resource by differently applying an energy level. According to the present method, it is able to mitigate a half-duplex problem and a contiguous collision issue by making retransmission to be relatively freely transmitted while initial transmission is protected.

Meanwhile, initial transmission and retransmission can be differently applied to a reservation operation. For example, when a specific resource is reserved for a next message generation period, the initial transmission and the retransmission can separately determine whether to perform reservation. For example, the initial transmission performs reservation and the retransmission can perform resource resection whenever a transmission is performed. Or, the retransmission can differently configure a condition for performing reselection. For example, an interference reception energy level or a probability value for performing the retransmission can be configured in a manner of being different from that of the initial transmission. In particular, the present method can be efficiently used when SA and data are transmitted together in every subframe or SA is always transmitted together. To this end, information indicating whether to perform reservation can be transmitted in a manner of being included in SA for the initial transmission and the retransmission. Meanwhile, when a reservation operation of initial transmission and a reservation operation of retransmission are individually applied (a UE performs a sensing/reservation operation for an initial transmission resource and a retransmission resource, respectively), if a subframe difference between the initial transmission and the retransmission is too big, a burden for buffering a corresponding packet of a reception UE may increase. Hence, it is preferable that the subframe difference between the initial transmission and the retransmission is to be equal to or less than a prescribed threshold. For example, if the initial transmission is performed in an $n^{th}$ subframe, it is preferable to determine a retransmission resource from among $n+1$, $n+2$, ..., $n+k$ subframes only. In this case, $k$ corresponds to a predetermined value or a value signaled by a network via physical layer signaling or higher layer signaling. The $k$ can be differently configured according to an RV or a retransmission number. A subframe becoming a reference of the $k$ may always correspond to an initial transmission subframe number or a previous retransmission subframe. If the reference subframe corresponds to the initial transmission subframe, since all retransmissions are completed prior to a $k^{th}$ subframe, UE implementation is easy. If the reference subframe corresponds to the previous retransmission subframe, since a region of a following retransmission subframe position is determined according to a position of the previous retransmission subframe, a UE may have an effect that a resource selection region is extended.

Meanwhile, when an initial transmission resource and a retransmission resource are individually selected, a position of the initial transmission resource can be changed for certain reason while the retransmission resource reserves the same resource. In this case, it may be able to determine a rule that initial transmission is to be performed in a subframe within a certain subframe region on the basis of a previously reserved retransmission resource subframe. In this case, specifically, it may be able to determine a rule that the initial transmission is to be performed prior to a retransmission subframe only (in this case, the retransmission subframe can be included). For example, when initial transmission is performed in an $n^{th}$ subframe and a corresponding packet is retransmitted in an $(n+k)^{th}$ subframe, if it is necessary to change a position of the initial transmission, an initial transmission subframe position is selected from among subframes ranging from an (n+k-m)th subframe to an (n+k-1)th subframe. In this case, the m may correspond to a predetermine value or a value signaled by a network via physical layer signaling or higher layer signaling.

Meanwhile, when a plurality of retransmissions are performed on a specific packet and selection and reselection are performed according to each of a plurality of the retransmissions, it may be able to determine a rule that it is necessary to perform a transmission within maximum +/- m SF difference between retransmission resources. In this case, it may be able to determine a rule that it is necessary to perform a transmission within maximum +/- m SF difference among all retransmissions. Or, it may be able to determine a rule that it is necessary to perform a transmission within m SF difference for retransmissions equal to or greater than minimum N (e.g., N=1) number of retransmissions among a plurality of the retransmissions. In this case, resource selection of initial transmission can be excluded from the above constraint. This is because, if there is no transmission, it is unable to apply the constraint. For example, when an SF n is selected as a transmission resource, it is necessary to select a retransmission resource from among subframes ranging from the subframe n to +/- m SFs. When a subframe for a next retransmission is selected, if at least one selected transmission subframe and +/- m SF constraint are used, the next retransmission should be transmitted prior to n+2m. In particular, when sensing is performed and a resource is selected, a resource selection range is determined according to resources determined in initial transmission and a previous retransmission.

Since a reception UE is able to assume that a retransmission signal is received within prescribed time via the abovementioned method, it is not necessary to make a HARQ buffer to have a size equal to or greater than a prescribed size. If latency requirement is tight (e.g., V2V signal), since a retransmission packet is forwarded within prescribed time, it may have a merit in that latency is not excessively increased.

Meanwhile, asynchronous HARQ is applied in DL. A minimum time difference of 4ms (FDD) exists between initial transmission and retransmission. This is aimed not only for determining retransmission based on whether or not A/N is received but also for securing buffering time for decoding of a reception UE. In particular, in order to make the reception UE not to perform an unnecessary HARQ combining operation, a minimum separation distance k can be configured between an initial transmission subframe and a retransmission subframe (between RVs in the retransmission subframe). For example, the k may correspond to 1. A UE can perform buffering and decoding under the assumption that retransmission is not performed in a very next subframe. If the UE succeeds in decoding a previously received packet, it is not necessary for the UE to perform HARQ combining on a codeword of the retransmission subframe. This method can be applied in a manner of being combined with the aforementioned maximum subframe difference constraint condition. In order to prevent excessive HARQ buffering and unnecessary HARQ combining operation, a minimum separation distance k1 and a maximum separation distance k2 can be determined in advance or signaled by a network via physical layer signaling or higher layer signaling according to an RV (between initial transmission and retransmission, between retransmissions). Hence, when a UE performs a reselection operation on an individual (re)transmission, the UE performs a sensing/selection operation on a resource within a prescribed region only. In this case, the k1 and the k2 may correspond to 1 and 15, respectively.

Meanwhile, when a sensing/reservation operation of initial transmission and a sensing/reservation operation of retransmission are individually applied, it is preferable to transmit SA whenever data is transmitted. In this case, if the SA indicates whether or not a resource is reserved for a next message transmission, the SA may not be transmitted. In this case, it may be able to determine a rule that a reception UE performs decoding using SA transmitted in a previous message generation period. This is aimed for reducing a packet loss in a manner that the reception UE performs data decoding based on information indicated by previous SA, even when SA transmission is not performed by a silencing operation and the like.

Meanwhile, when a UE performs a sensing operation, the UE may fail to sense a subframe transmitted by the UE due to a half-duplex constraint. In order to sense the subframe, the UE may stop transmission and perform an operation of performing sensing. However, if a transmission of a specific packet is stopped, a PRR (packet reception ratio) can be reduced as much as a ratio of stopping the packet transmission. In order to solve the problem, a correlation between an initial transmission resource position and a retransmission resource position can be configured in time domain to determine whether or not there is a signal of a different UE in a subframe transmitted by a UE without terminating the entire packet transmission (initial transmission + retransmission). If the initial transmission resource position is correlated with the retransmission resource position in time domain, a UE may avoid an operation of stopping all transmissions and performing sensing to detect an energy level of a subframe transmitted by the UE. To this end, the UE can determine an initial transmission position and a retransmission position in time domain in advance. For example, if initial transmission is performed in an nth subframe, it may be able to determine a rule that retransmission is to be performed in n+k1, n+k2,..., n+kN (maximum retransmission count N, k1, k2,...,kN correspond to predetermined values). Since it is necessary for the k1, k2,...,kN to be commonly known to UEs, the values can be determined in advance or signaled to the UEs by a network via higher layer signaling. The values can be indicated to a reception UE via a control channel (PSCCH) of a transmission UE. And, when a packet is transmitted, information indicating a retransmission count of the currently transmitted packet (or, information indicating an RV) is transmitted to a partial RE region of the packet (e.g., UCI piggyback) or indicated via SA. Or, a DMRS CS is differently configured according to a retransmission count. By doing so, it may be able to identify a different (re)transmission position of the UE.

It may be able to define a rule that a transmission UE performs sensing by stopping transmission in a partial retransmission in the middle of performing transmission according to a prescribed probability or a predetermined rule. When each of UEs stops transmission in a specific subframe at the same time to perform sensing, it is difficult to perform precise sensing. Hence, it is preferable for each of the UEs to perform silencing at a different position. A UE can randomly select a position at which silencing is performed in initial transmission and retransmission. Or, a UE can change a position at which silencing is performed according to an ID of a transmission UE. In this case, since initial transmission corresponds to a packet including many systematic bits, if silencing is performed on the packet, reception performance of a reception UE can be deteriorated. Hence, it may be able to configure a first packet not to be included in a packet on which silencing is performed. Or, it may be able to configure silencing to be performed on the first packet with a probability lower than a probability applied to a different retransmission. And, when RVs are transmitted in an order of an RV0, RV 2, RV 3, and RV 1, a different silencing probability can be configured according to an RV. For example, the RV1 can perform silencing with a probability higher than that of the RV0.

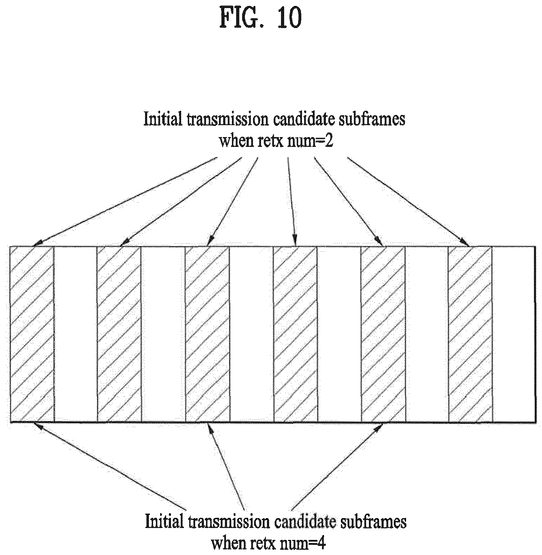

When silencing is performed at a position at which a packet is transmitted and then sensing is performed, if a retransmission count is not directly identified via data decoding (if sensing is simply performed via energy sensing), it may be difficult to identify a relation between a currently sensed packet and a different retransmission position. In this case, it may also set a limit on a position of initial transmission. For example, as shown in FIG. 10, if it is able to configure a retransmission count (including initial transmission) of a UE by one of 2 and 4, it may be able to determine a rule that initial transmission of a packet, which is retransmitted two times, is performed in every even numbered subframe only. And, it may be able to determine a rule that initial transmission of a packet, which is retransmitted four times, is performed in every subframe corresponding to a multiple of 4 only. In particular, it may be able to determine a rule that a position at which initial transmission is performed is designated in advance, a UE performs the initial transmission at the designated position (subframe, time resource) only, and performs retransmission at a position interlocked with the initial transmission (subframe, time resource). In this case, assume that each retransmission is performed in a subframe appearing right after a subframe in which initial transmission is performed. Since a subframe in which initial transmission is performed is determined, a UE performs the initial transmission in the subframe only and performs retransmission in a subframe appearing after the subframe in which the initial transmission is performed. In this case, if silencing is performed in the subframe in which the retransmission is performed and a signal of a different UE or energy equal to or greater than a prescribed threshold is detected in the subframe in which the retransmission is performed, it is able to anticipate that similar energy is to be detected in the initial transmission subframe interlocked with the subframe in which the retransmission is performed. By using the abovementioned method, the UE is able to identify whether or not a different packet is transmitted without performing silencing on all packets.

Meanwhile, if reservation is made with a prescribed period, since the same RS sequence/scrambling sequence used by UEs is continuously used, it may be difficult to fully randomize the sequence. For example, when an RS sequence is changed in every radio frame, if a resource is reserved with a period of a multiple of 10 ms (e.g., 100 ms), the same RS sequence is continuously used. In order to prevent this, an RS/scrambling sequence can be generated by including a reservation counter in a sequence initialization parameter whenever reservation is performed. And, in order to make a reception UE recognize the generated RS/scrambling sequence, SA including a reservation count can be transmitted to the reception UE or the information can be transmitted to a certain RE of data by piggybacking the information. In a legacy sidelink, an RS sequence is generated on the basis of the same cell ID (e.g., 510). In case of data, a scrambling/RS sequence is generated by utilizing an ID included in SA as an initialization parameter. In this case, when a reservation count varies according to a UE, if the reservation count is included in the initialization parameter, each of UEs can use a different RS/scrambling sequence.

## Method of indicating resource for transmission

As mentioned in the foregoing description, according to a legacy D2D communication, a T-RPT bitmap indicated by SA is repeated in an SA period and a D2D signal is transmitted at a position indicated by the T-RPT. In this case, if the T-PRT is simply repeated in an SA period, since UEs, which have selected the same T-RPT, continuously perform transmission in the same subframe, the UEs are unable to receive a mutual data. Meanwhile, in V2X communication, a period of generating a message corresponds to 100ms and time taken for successfully receiving the message (i.e., latency requirement) is very important for preventing an accident. Hence, in V2X, if two UEs apply T-RPT by simply repeating the T-RPT, since it is unable to satisfy the latency requirement and it may lead to an accident, it is necessary to have a solution. In the following, methods of indicating a resource for transmission related to the T-RPT are explained.

When a UE determines a T-RPT bitmap, it may be able to configure the T-RPT bitmap to hop with a certain interval within an SA period. In this case, specifically, assume that an interval of repeating the T-RPT bitmap corresponds to the N number of subframes. In this case, the T-RPT bitmap is indicated in a manner that T-RPT is changed to a different T-RPT with an interval of the A number of subframes. In this case, the A and the N may correspond to a predetermined value or a value configured by a network. In this case, since it is necessary for a hopping pattern of the T-RPT to vary according to a UE, a transmission UE can signal necessary information to a different UE via physical layer signaling or higher layer signaling. For example, a seed value used for T-RPT hopping can be signaled in a data subframe in which SA or a first T-RPT indicated by the SA is transmitted. A reception UE receives the seed value, anticipates a pattern of the transmission UE to be used for transmitting T-RPT, and may attempt to receive the T-RPT in a corresponding subframe. In this case, the seed value for T-RPT hopping may have such a form as an ID in the SA. A seed value of a T-RPT hopping pattern can be configured by a combination of a plurality of fields included in the SA. For example, the seed value of the TRP hopping pattern can be controlled by a combination of an ID field and an MCS field. If the seed value has a form such as an ID, since it is necessary for the ID to vary according to a transmission UE, the ID can be comprehended as an ID of a transmission UE. Although the ID corresponds to an ID of a reception UE or an ID of a reception UE group, a method of inducing a higher layer ID from a physical layer indicator can be differently applied according to a transmission UE to make each transmission UE select a different value.

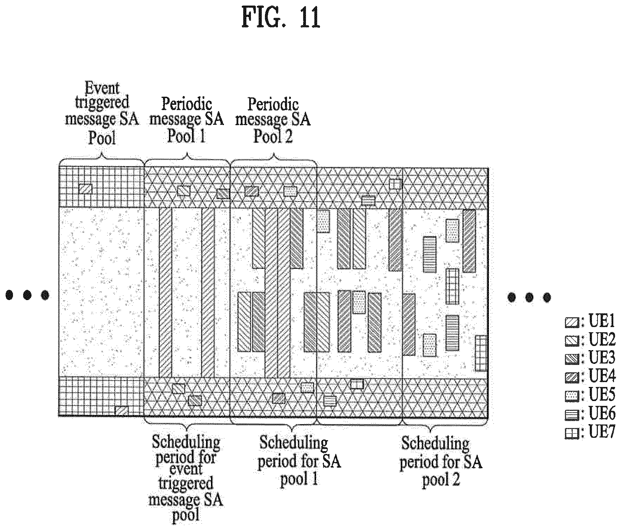

Meanwhile, the T-RPT hopping scheme requires signaling of additional information to indicate a hopping pattern. In order to reduce the additional signaling, it may consider using an index of each T-RPT as a seed value of T-RPT hopping. According to the present scheme, although it is unable to prevent collision between UEs using the same T-RPT, it may be able to reduce a case of mutually and consistently interfering with each other between T-RPTs. As shown in FIG. 11, if an SA pool is configured to be short in time domain and is FDMed with a data pool, a period of the data pool can also be configured to be short in time domain. For example, the SA pool and the data pool may appear with a period of 10 ms. In this case, it may consider mapping T-RPT over a plurality of data periods. More specifically, T-RPT is mapped to a D2D subframe in a manner that the same bitmap is repeated in an SA period. If the SA period is not a multiple of the T-RPT, the last T-RPT is sequentially mapped from the first bitmap. A bitmap exceeding the SA period is truncated. In this case, hopping can be performed with a different T-RPT in every SA period. To this end, a UE ID or a seed value for T-RPT hopping can be signaled by a transmission UE or a hopping pattern can be determined in advance according to each T-RPT. Or, when T-RPT is mapped over a plurality of data periods, the T-RPT is continuously mapped without performing truncation in each of a plurality of the data periods and the T-RPT bitmap truncation is performed in the very last data period only. In this case, if a period of a data pool is not a multiple of a T-RPT length, since the last T-RPT is frequently truncated, it may be able to solve a problem that a specific UE consistently loses a transmission opportunity. As a further different method, it may be able to define T-RPT identical to an SA period size. For example, T-RPT of 10C2 or 10C4 is sequentially indexed in an SA period of 10ms and can be signaled via SA.

When a UE selects a T-RPT and performs an operation of hopping a T-RPT, the UE can perform an operation of selecting a T-RPT from a T-RPT set only restricted by a network via signaling. If a T-RPT hopping seed is signaled by a transmission UE, it is necessary to have a method of selecting a T-RPT hopping index from a T-RPT set restricted by the network only when the T-RPT hopping index is selected based on the seed value. For example, the UE may select T-RPT from a T-RPT subset based on a value resulted from performing modular arithmetic with the number of T-RPTs included in the T-RPT subset restricted by a network in a result of random numbers generated by a seed value signaled by the UE. In particular, if the T-RPT set is restricted, it is able to solve a problem capable of being occurred when a legacy UE selects T-RPT from all sets capable of being used in a D2D resource region or selects T-RPT from T-RPTs only restricted by a network via T-RPT restriction signaling. More specifically, a specific UE may select a T-RPT having a high transmission opportunity only from the T-RPT set (N corresponds to a length of a T-RPT bitmap and k corresponds to the number of 1s in the T-RPT bitmap. In this case, the high transmission opportunity means that the k is large.). If transmission opportunities are not uniformly distributed over time, performance between UEs may become unequal and unfair. The problem can be solved by restricting the T-RPT set.

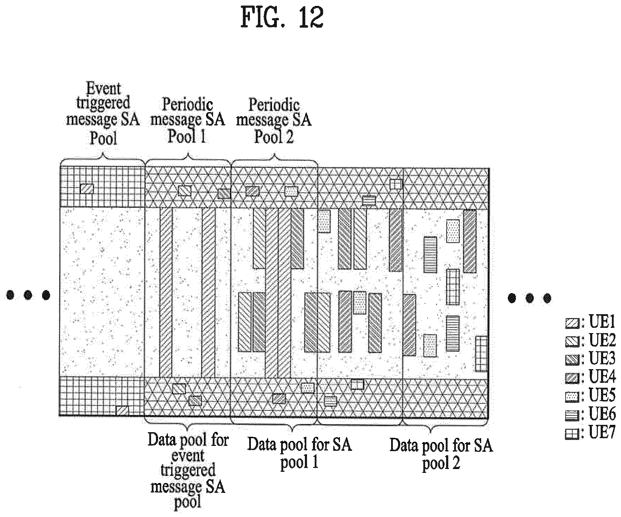

Referring to FIG. 12, when an SA pool is configured by a short time period and a data pool is configured by a long time period, a plurality of data pools can be overlapped in time domain. In particular, if the data pool is configured to be long, the T-RPT indicated by the SA can be continuously applied in the data pool. To this end, it may consider configuring a resource pool with a different scheme. According to the related art, if a plurality of resource pools are configured, an SA pool bitmap and a data pool bitmap are signaled according to each of a plurality of the resource pools. Yet, when resource pools are configured as shown in FIG. 12, if the resource pools are signaled by a separate bitmap, it may cause excessive signaling overhead. In order to avoid the excessive signaling overhead, 'one SA pool + data pool' is configured on the basis of DFN. If the resource pool is configured in a manner of being shifted to time domain, it may have such an effect as FIG. 12 using signaling of 'one resource pool signaling + added scalar value'. FIG. 12 illustrates a resource pool which is configured in a manner of being shifted in time domain as much as a subframe size of an SA pool. It may be able to continuously configure the resource pool by explicitly introducing a resource pool shift parameter. The shifted resource pool is configured by starting with a DFN #0. All or a part of a length of a shifted subframe, the maximum number of shifting, and a period of a shifted pool can be explicitly signaled, configured in advance using a specific value, or implicitly applied by an SA pool size. In this case, the shifting count can be explicitly signaled to a network. If there is no separate signaling, the shifting can be consistently repeated until a DFN cycle is fully filled.

In order to perform the abovementioned operation, it may introduce a new resource pool bitmap length. For example, if a V2X message is generated with a period of 100 ms, it is preferable to configure a length of a resource pool bitmap by a denominator of the period. And, it is preferable to configure the length of the resource pool bitmap by a multiple of 10 ms corresponding to a length of a legacy radio frame. In particular, such values as 10ms, 20ms, 50ms, and 100ms can be signaled by a network.

Meanwhile, it is preferable that a period of a newly configured pool corresponds to a denominator of an SFN period 10240 ms. For example, the period may correspond to a denominator of a message transmission period (100ms) and a system frame period (10240ms). For example, 10 ms and 20 ms may correspond to candidates of the period of the newly configured pool. If the message transmission period corresponds to 50 ms, 10 ms corresponding to a denominator of 10240 and 50 may become a bitmap length of a resource pool. According to the present method, although a message is reserved according to a transmission period, since a next reserved subframe always corresponds to a V2X resource, it is able to stably perform transmission.

Or, as mentioned in the foregoing description, a denominator of 100 ms can be configured as a new SA period. In this case, if a period is not a denominator of 10240 ms, discontinuity of an SA period may occur in an SFN period. For example, if an SA period of 50 ms is configured, the last SA period may have 40 ms only. In this case, it may consider two methods described in the following.

As a first method, the last resource pool period of the SFN period can be configured by a size as much as a size resulted from dividing 10240 by a resource pool period. According to the present method, it is promised between a transmission UE and a reception UE that the last resource pool period is configured by a shortened resource pool period. T-RPT or the number of subframes in a pool is considered by a reduced size. The present method has a merit in that all transmissions are stably performed even in the last resource pool period. However, since the number of subframes is reduced in the last period, it may experience stronger interference compared to a different resource pool period. And, a UE, which has performed reservation in the last resource pool period, may lose a transmission occasion. If a resource is selected out of the resource pool period in the reservation and a transmission occasion is disappeared, a processing method described in the following can be used. It may be able to configure resource selection or resource reservation not to be performed in a resource pool period having a different last length. In particular, it may be able to determine a rule that SA reservation or data transmission reservation is not allowed in the last resource pool period. For example, when a message generation period corresponds to 100ms, if a UE transmits SA/data during 100 ms immediately before the last SA period, the UE is unable to perform reservation in the last SA period. Hence, the UE informs a reception UE that the UE does not perform reservation. Although the UE informs the reception UE that the UE performs reservation, the reception UEs may assume that the reservation is not performed in the last SA period. The present method can also be comprehended as a method of defining a rule that reselection is always performed in the last SA period. Or, when reservation is performed in the last SA period, if a resource is selected out of the SA period, it is able to determine a rule between a transmission UE and a reception UE that a corresponding transmission is to be dropped. According to the present method, it may be able to maintain legacy reservation. A corresponding packet is dropped only when SA or data is transmitted while deviating from the SA period.

As a second method, in the last SA period of an SFN period, if transmission exceeds the SFN period, the transmission can be dropped. Although it is able to assume an SA pool size identical to a different SA period and T-RPT indication, if a transmission is indicated in a region exceeding an SA period, an operation of dropping all transmissions is performed. According to the operation, a UE, which has performed reservation after sensing, can maintain legacy resource allocation without modifying reselection. Moreover, since it is not necessary to modify transmission subframe indication or SA hopping, the operation can be simply performed.

It is preferable that a shifted pool period is also interlocked with a message generation period. It is preferable to include a case that the message generation period is extended as much as 500ms in an interference situation between UEs. In particular, such values as 100ms, 200ms, 400ms, and 500ms can be signaled by a network.

Meanwhile, a transmission period of a synchronization signal may correspond to a multiple of 100 ms. In this case, a case of failing to perform transmission with an interval of 100 ms may occur at a boundary of SFN (system frame number) or DFN (D2D frame number) (10240 ms) period. In this case, it may consider a method of transmitting a synchronization signal as follows.

A period of receiving a synchronization signal is determined on the basis of SFN0. In the present method, a start subframe position and a transmission period of a synchronization signal transmission can be configured. For example, when transmission is performed with an offset of 5 and a period of 100 ms, a synchronization signal is transmitted in a 5th, a 105th, and a 205th subframe on the basis of a 1st subframe of SFN0. When 10205th SF is transmitted, a next transmission is performed in a (10240+5)th subframe rather than a 10305th subframe.

When a synchronization signal is transmitted with a period of 100 ms, in order to identify the synchronization signal at an SFN boundary, a field for indicating an SFN period at which the synchronization signal is transmitted can be signaled in a manner of being included in PSBCH or synchronization signal configuration information of an eNB. For example, in the abovementioned example, a transmission after the 10205th transmission becomes a 10305th subframe

on the basis of an initial SFN0. The transmission after the $10205^{th}$ transmission becomes $10305-10240=65^{th}$ subframe on the basis of SFN0 of a next SFN period. In particular, an offset corresponds to 5 on the basis of the initial SFN period. In this case, since the offset is changed in the next SFN period, in order to identify the changed offset, it is necessary for a transmission UE and a reception UE to know an order of an SF offset for transmitting a synchronization signal in a current SFN period. Since the offset changes in every SFN period, information indicating an order of a current SFN period can be transmitted in a manner of being included in PSBCH and synchronization signal configuration information of an eNB.

When UEs select a resource, the UEs can independently select a resource in every shifted pool period. Once a resource is selected, the UEs may be able to maintain the selected resource over a plurality of shifted pool periods. In this case, when the resource is maintained over a plurality of the shifted pool periods, a network can signal (UE (group) common or UE specific) duration for which the resource is maintained. Or, a UE may signal the duration to a different UE.

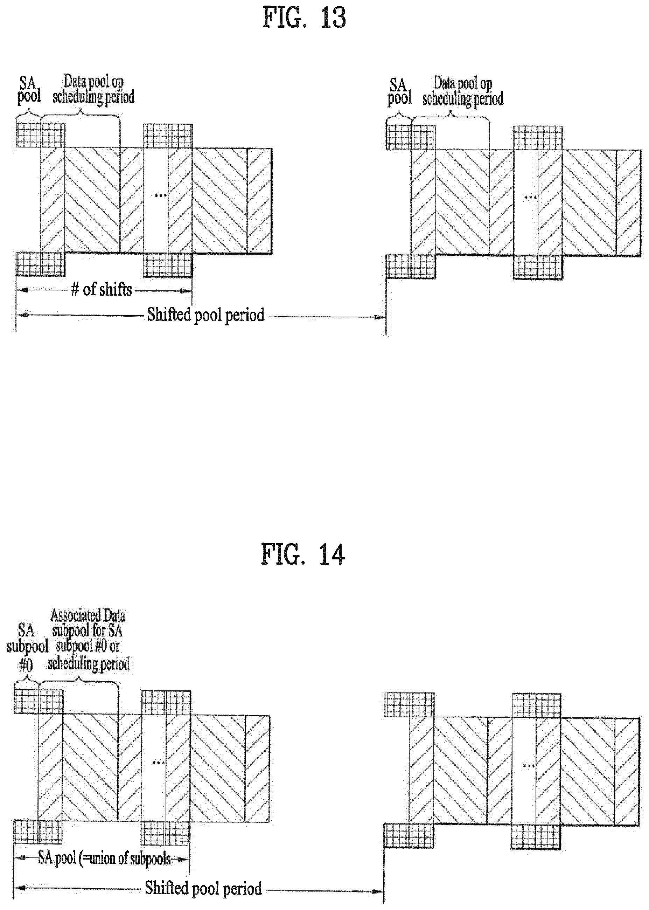

If a subframe size of a data pool is not configured as FIG. 13 (the subframe size is greater than SA pool subframe size) and the subframe size of the data pool is equal to the SA pool subframe size, a transmission UE can explicitly signal the number of data pool periods to which an indication of resource selection is applied (or the number of shifted data pools to which the indication is applied) via one SA transmission. And, a network can signal the number of data pool periods for which SA of a transmission UE is maintained (or the number of shifted data pools to which the SA is applied).

Meanwhile, a part of the control information signaling between UEs can be transmitted in a manner of being included in a first T-RPT bitmap indicated by SA, a first data packet, or a predetermined data packet. The information can be determined in advance or configured by a network. The information can be differently configured according to a message type or a UE type.

Meanwhile, the operations mentioned earlier in FIG. 13 can be implemented by a method of determining a signaling or a rule indicating one SA pool divided into a plurality of SA sub pools and an SA sub pool interlocked with a data pool or a sub pool. FIG. 14 illustrates an embodiment of the method. In this case, according to the legacy Rel. 12/13 D2D, a bitmap of a data pool is applied after an associated SA pool ends. On the contrary, according to the present operation, such a restriction should be eliminated. Yet, it may be able to determine a rule that T-RPT bitmap of an SA sub pool is applied from a data pool appearing after the SA sub pool. In this case, information on a point to which data transmission indicated by SA transmitted from an SA sub pool is to be applied can be signaled to UEs via physical layer signaling or higher layer signaling of a network. A point where resource allocation is maintained by a transmission UE can be signaled to a reception UE via D2D signal, a physical layer signal, or a higher layer signal.

A priority can be mapped to an SA sub pool or a shifted pool. Meanwhile, in the description mentioned earlier with reference to FIG. 12, since such a characteristic as a type of a message transmitted by a UE, a priority, a UE type, etc. is assigned to each SA pool, an SA sub pool, a data pool or a data sub pool interlocked with the SA sub pool, or a scheduling period in advance, it is able to determine a rule that a UE corresponding to the characteristic or a message type/UE type satisfying the characteristic transmits a data only. In this case, characteristic information assigned to an SA pool or a sub pool can be signaled by a network or can be configured in advance. For example, a first SA pool shown in FIG. 13 corresponds a pool in which an event triggered message is transmitted only and a different UE is unable to transmit SA in the first SA pool. More generally, resources used by UEs having a different priority are distinguished from each other in time domain and an SA pool (or sub pool or a shifted pool) is divided again according to a priority. In this case, it is preferable to preferentially allocate a resource of a high priority in time domain to make UEs of a low priority to easily perform an avoidance action. Although this concept could be comprehended as a priority level is interlocked with each resource pool, the concept may also indicate that an SA and/or a data pool is distinguished from each other in time domain on the basis of a size of a message without such a concept as a priority. For example, an SA pool transmitted by a UE having a big message size is distinguished from an SA pool transmitted by a UE having a small message size in time domain. In particular, if the SA pool transmitted by the UE having the big message size is preferentially allocated, the UE having the small message size can operate by avoiding a resource region in which the UE having the big message size performs transmission. If the SA pool transmitted by the UE having the small message size is preferentially allocated, since many data pools are already segmented by a small message size, it is difficult for the UE having the big message size to avoid the data pools. In particular, in order avoid the abovementioned demerit, a data pool (or SA (sub) pool or shifted SA pool or data sub pool, data shifted pool) can be restricted according to a message type or size, a resource size, or a priority.

In this case, it may be able to determine an exceptional rule that data transmission is not allowed to an SA pool configured for a specific UE or a data pool overlapped with an SA sub pool in time domain. For example, if a range of a PPP (per packet priority) is set to an SA pool in advance (or if the range is configured by a network), it is able to determine a rule that a data of a priority level lower than the PPP of the SA pool is not transmitted in a data pool overlapped with the SA pool in time domain.

When a message is generated, a UE performs SA transmission in a sub pool (or a shifted SA pool) closest to the timing at which the message is generated. In this case, resource allocation can be performed in a manner that a resource of data is allocated by avoiding an already occupied resource after receiving SA in a previous SA sub pool (or a previous shifted SA pool). In this case, when a UE reads SA of a different UE and selects a resource allocation of the UE, the UE may selectively apply SA of the same priority or SA of a higher priority to a resource allocation avoidance operation. Or, the UE may perform the resource allocation avoidance operation on all detected SAs.

Meanwhile, when all SAs of a previous SA sub pool (or shifted pool) are detected, if there is no resource to be selected or very strong interference is anticipated, a transmission UE can signal a point at which T-RPT starts. The present invention proposes a method that the transmission UE dynamically signals a region at which T-RPT starts and a region at which the T-RPT ends in a manner of interlocking with the aforementioned method of signaling a section to which scheduling is applied. For example, in FIG. 12, when SA is transmitted in an SA pool, timing of a start SA sub pool (or shifted pool) to which T-RPT is applied in response to the SA and an index of an end SA sub pool (or shifted pool) can be signaled via SA. Or, when SA of a previous SA sub pool is detected, if there is no resource to be transmitted, 'no resource' means that a ratio of empty resource to resources in a scheduling period is less than X %. The X can be signaled by a network or a different stationary UE/node. Or, the X may correspond to a preconfigured value or a value autonomously determined by a UE by measuring surrounding interference. In this case, application of the X can be differently configured according to a message type/size/priority. The X can be differently configured depending on a type of a UE (a pedestrian UE, a fixed road side unit, a vehicle UE). In this case, it may give up SA transmission in the SA sub pool (or shifted pool) and it may perform transmission in a following SA sub pool. In particular, it may be able to determine a rule that transmission is performed in an SA sub pool only when the amount of occupied resources, which are identified via SA detected in a previous SA sub pool, is equal to or less than the amount of resources within a total scheduling period.

Meanwhile, when transmission is performed by making T-RPT hop during a single scheduling period or multiple SA sub pool periods, if a scheduling period is long as long as 40 ms and a transmission count is less as small as 2 times during the entire scheduling periods, a sub period for which transmission is never performed occurs. And, if a length of a resource pool corresponds to a multiple of 10 ms and T-RPT corresponds to an 8-bit bitmap, since lengths are not matched, truncation can be frequently performed. In order to overcome the demerit, it may additionally define a T-RPT bitmap of a length of 10 bits. In this case, such a small value as 0, 1, or 2 can be used as k value for V2V In order to maintain a legacy 7-bit T-RPT bit size, the k can include a big value. For example, N=10, K=8,9,10, etc. can be included. T-RPT of a big value can be used to transmit an RSU or an event triggered message. In order to include a sub pool which has no change to perform transmission, the present invention proposes to include T-RPT of all zeros in a T-RPT hopping pattern. In this case, in order to make an all zero state to be selected with a chance similar to K=1 or k=2, the present invention proposes to prepare a plurality of all zero states rather than a single all zero state. In particular, when T-RPT is randomly selected, since an all zero state is selected with a constant probability, the very small number of transmission can be enabled during the entire scheduling periods. As a different scheme, a UE may directly indicate a sub pool period for which transmission is not performed (via physical layer signaling or higher layer signaling, e.g., SA). In this case, the UE selects T-RPT in a sub pool in which transmission is performed only. T-RPT uses all zeros in a sub pool in which transmission is not performed. For example, when a scheduling period corresponds to 40 ms and a sub pool corresponds to 10 ms, k=1 is used and whether or not a transmission is performed in each sub pool can be signaled via SA or a different channel. For example, 1001 indicates that transmission is performed in the first 10 ms and the last 10 ms only and transmission is not performed in the remaining sub pools.

Meanwhile, T-RPT hopping may appear over a plurality of SA periods when an SA period or a scheduling period is greater than an SA pool size. In this case, it may be able to configure T-RPT to change with a prescribed rule in every message generation period. In this case, the prescribed rule can be changed by a function of an ID of SA or can be explicitly indicated via SA. For example, an index of T-RPT hopping can be changed by a random variable generator having a function of an ID according to the prescribed rule. For example, when a UE transmits a message with a period of 100ms, if T-RPT indexes 1 and 5 are used to transmit a first message, T-RPT indexes 4 and 7 are used in a next 100 ms. In this case, if an ID of a transmission UE1 is different from an ID of a transmission UE2, a pattern of changing T-RPT can be differently changed.

As a variation of the abovementioned method, it may change an SA period index (sub pool index) rather than a T-RPT index. In this case, an SA period index at which a message is to be transmitted can be explicitly indicated via SA or can be determined by an ID. For example, if a message generation period corresponds to 100ms and an SA pool is configured with a period of 10ms, 10 SA periods exist in every message generation period. In this case, when a first message is transmitted in a first SA period and a next message is to be transmitted after 100ms, if a UE checks that a resource to be transmitted by the UE is used by a different UE, the UE transmits SA in a next period or a previous period using SA period offset included in the SA.

As a different method, it may change a subframe position in which an actual data is transmitted rather than a T-RPT index by shifting T-RPT. The subframe position can be transmitted in a manner of being explicitly included in SA or can be determined by an ID.

Meanwhile, T-RPT indicates not a subframe in which PSSCH is transmitted but a subframe capable of being transmitted. If actual transmission is not performed, a transmission UE can perform reception naturally. In this case, the transmission UE can inform reception UEs of the timing at which actual data is transmitted. The timing can be explicitly indicated by SA or can be determined by an ID included in the SA. For example, assume that a specific SA period has 8 transmission occasions in total and a UE performs transmission two times. In this case, the transmission UE may transmit SA in a manner of including a number selected from numbers ranging from 1 to 8 in the SA. Or, the transmission UE may implicitly indicate a function (select a number via an ID between 1 to 8, obtain a number between 1 and 8 by operating modular in a random number generator based on ID as seed) of an ID included in the SA. The transmission UE transmits actual data at the timing and a reception UE is able to identify a position at which the data is actually received. According to the present method, although the same T-RPT is selected between UEs, it may be able to solve a half-duplex problem and a collision issue by making a position at which actual data is transmitted to be differentiated.

Meanwhile, in the foregoing description, using the T-RPT can be replaced with a method of continuously transmitting data in a plurality of contiguous subframes. In this case, unlike a T-RPT index, it can be comprehended as a subframe index at which a transmission starts is changed. In particular, when a start subframe index n is used in a specific message generation period, if a collision due to a different UE is anticipated in a next message generation period, an offset value for changing a start subframe position can be transmitted in a manner of being included in SA. The offset value can include 0. It indicates that resource allocation is not change at the next SA transmission. If a value rather than 0 is included in the offset value, it may indicate that an SA period index, a T-RPT index, a subframe position at which a transmission starts, an actual transmission position in T-RPT, or a position of a transmission subframe is changed. The offset value can be transmitted in a manner of being explicitly included in the SA. Or, the offset value can be implicitly determined by an SA ID.

Examples for the aforementioned proposed methods can also be included as one of implementation methods of the present invention. Hence, it is apparent that the examples are regarded as a sort of proposed schemes. The aforementioned proposed schemes can be independently implemented or can be implemented in a combined (aggregated) form of a part of the proposed schemes. It may be able to configure an eNB to inform a UE of information on whether to apply the proposed methods (information on rules of the proposed methods) via a predefined signal (e.g., physical layer signal or upper layer signal).

## Configurations of Devices for Embodiments of the Present Invention

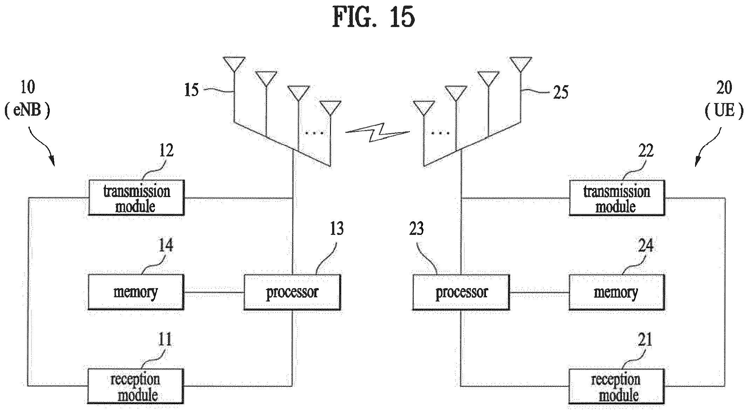

FIG. 15 is a diagram for configurations of a transmitter and a receiver.

Referring to FIG. 15, a transmit point apparatus 10 may include a receive module 11, a transmit module 12, a processor 13, a memory 14, and a plurality of antennas 15. The antennas 15 represent the transmit point apparatus that supports MIMO transmission and reception. The receive module 11 may receive various signals, data and information from a UE on an uplink. The transmit module 12 may transmit various signals, data and information to a UE on a downlink. The processor 13 may control overall operation of the transmit point apparatus 10.

The processor 13 of the transmit point apparatus 10 according to one embodiment of the present invention may perform processes necessary for the embodiments described above.

Additionally, the processor 13 of the transmit point apparatus 10 may function to operationally process information received by the transmit point apparatus 10 or information to be transmitted from the transmit point apparatus 10, and the memory 14, which may be replaced with an element such as a buffer (not shown), may store the processed information for a predetermined time.

Referring to FIG. 15, a UE 20 may include a receive module 21, a transmit module 22, a processor 23, a memory 24, and a plurality of antennas 25. The antennas 25 represent the UE that supports MIMO transmission and reception. The receive module 21 may receive various signals, data and information from an eNB on a downlink. The transmit module 22 may transmit various signals, data and information to an eNB on an uplink. The processor 23 may control overall operation of the UE 20.

The processor 23 of the UE 20 according to one embodiment of the present invention may perform processes necessary for the embodiments described above.

Additionally, the processor 23 of the UE 20 may function to operationally process information received by the UE 20 or information to be transmitted from the UE 20, and the memory 24, which may be replaced with an element such as a buffer (not shown), may store the processed information for a predetermined time.

The configurations of the transmit point apparatus and the UE as described above may be implemented such that the above-described embodiments can be independently applied or two or more thereof can be simultaneously applied, and description of redundant parts is omitted for clarity.

Description of the transmit point apparatus 10 in FIG. 15 may be equally applied to a relay as a downlink transmitter or an uplink receiver, and description of the UE 20 may be equally applied to a relay as a downlink receiver or an uplink transmitter.

The embodiments of the present invention may be implemented through various means, for example, hardware, firmware, software, or a combination thereof.

When implemented as hardware, a method according to embodiments of the present invention may be embodied as one or more application specific integrated circuits (ASICs), one or more digital signal processors (DSPs), one or more digital signal processing devices (DSPDs), one or more programmable logic devices (PLDs), one or more field programmable gate arrays (FPGAs), a processor, a controller, a microcontroller, a microprocessor, etc.

When implemented as firmware or software, a method according to embodiments of the present invention may be embodied as a module, a procedure, or a function that performs the functions or operations described above. Software code may be stored in a memory unit and executed by a processor. The memory unit is located at the interior or exterior of the processor and may transmit and receive data to and from the processor via various known means.

Preferred embodiments of the present invention have been described in detail above to allow those skilled in the art to implement and practice the present invention. Although the preferred embodiments of the present invention have been described above, those skilled in the art will appreciate that various modifications and variations can be made in the present invention without departing from the scope of the invention. For example, those skilled in the art may use a combination of elements set forth in the above-described embodiments. Thus, the present invention is not intended to be limited to the embodiments described herein, but is intended to accord with the widest scope corresponding to the principles and novel features disclosed herein.

The present invention may be carried out in other specific ways than those set forth herein without departing from the essential characteristics of the present invention. Therefore, the above embodiments should be construed in all aspects as illustrative and not restrictive. The scope of the invention should be determined by the appended claims. The present invention is not intended to be limited to the embodiments described herein, but is intended to accord with the widest scope consistent with the principles and novel features disclosed herein.

INDUSTRIAL APPLICABILITY

The embodiments of the present invention can be applied to various mobile communication systems.

**Claims**

1. A method of transmitting data by a V2X, vehicle to everything, user equipment, UE, in a wireless communication system, the method comprising:

   selecting, by the V2X UE, a first resource for a transmission of a PSSCH, Physical sidelink shared channel;
   selecting, by the V2X UE, a second resource, **characterized by** the second resource being for a reservation of a retransmission of the PSSCH based on a restriction that a time duration between the first resource and the second resource is shorter than or equal to a predetermined value,
   performing, by the V2X UE, retransmission of the PSSCH via the second resource after the time duration from transmission of the PSSCH via the first resource.

2. The method of claim 1, wherein a length of a subframe bitmap indicating sidelink resource including the first resource is determined from a value set, wherein the value set include {10ms, 20ms, 50ms, 100ms}.

3. The method of claim 1, wherein if a resource pool is changed, the V2X UE performs a resource reselection.

4. The method of claim 1, wherein if the V2X UE performs a retransmission more than two times, each retransmission is performed within a maximum m number of subframes.

5. A user equipment, UE, (20) transmitting V2X, vehicle to everything, data in a wireless communication system, the UE comprising:

   a transmitter (22) and a receiver (21); and
   a processor (23), the processor configured to select a first resource for a transmission of a PSSCH, Physical sidelink shared channel, to select a second resource and **characterized by** the second resource being for a reservation of a retransmission of the PSSCH based on a restriction that a time duration between the first resource and the second resource is shorter than or equal to a predetermined value and to perform retransmission of the PSSCH via the second resource after the time duration from transmission of the PSSCH via the first resource.

# EP 3 373 641 B1

**Patentansprüche**

1. Ein Verfahren zum Übertragen von Daten durch ein V2X, Vehicle to Everything, Benutzergerät, UE, in einem drahtlosen Kommunikationssystem, wobei das Verfahren umfasst:

   Auswählen, durch das V2X UE, einer ersten Ressource für eine Übertragung eines PSSCH, Physical sidelink shared channel;
   Auswählen, durch das V2X UE, einer zweiten Ressource, **dadurch gekennzeichnet, dass** die zweite Ressource für eine Reservierung einer erneuten Übertragung des PSSCH ist basierend auf einer Beschränkung, dass eine Zeitdauer zwischen der ersten Ressource und der zweiten Ressource kürzer als ein vorbestimmter Wert ist,
   Durchführen, durch das V2X UE, einer erneuten Übertragung des PSSCH über die zweite Ressource nach der Zeitdauer ab der Übertragung des PSSCH über die erste Ressource.

2. Verfahren nach Anspruch 1, wobei eine Länge einer Subframe-Bitmap, die eine Sidelink-Ressource einschließlich der ersten Ressource anzeigt, aus einem Wertesatz bestimmt wird, wobei der Wertesatz {10ms, 20ms, 50ms, 100ms} enthält.

3. Verfahren nach Anspruch 1, wobei das V2X UE bei einer Änderung eines Ressourcenpools eine Ressourcenneuauswahl durchführt.

4. Verfahren nach Anspruch 1, wobei, wenn das V2X UE eine erneute Übertragung mehr als zweimal durchführt, jede erneute Übertragung innerhalb einer maximalen Anzahl von m Subframes durchgeführt wird.

5. Ein Benutzergerät, UE, (20), das V2X, Vehicle to Everything, Daten in einem drahtlosen Kommunikationssystem überträgt, wobei das UE umfasst:

   einen Sender (22) und einem Empfänger (21); und
   einen Prozessor (23), wobei der Prozessor so konfiguriert ist, eine erste Ressource für eine Übertragung eines PSSCH, Physical sidelink shared channel, auszuwählen, eine zweite Ressource auszuwählen und **dadurch gekennzeichnet ist, dass** die zweite Ressource für eine Reservierung einer erneuten Übertragung des PSSCH auf der Grundlage einer Beschränkung ist, dass eine Zeitdauer zwischen der ersten Ressource und der zweiten Ressource kürzer als ein vorbestimmter Wert ist, und eine erneute Übertragung des PSSCH über die zweite Ressource nach der Zeitdauer ab der Übertragung des PSSCH über die erste Ressource durchzuführen.

**Revendications**

1. Procédé de transmission de données par un équipement utilisateur de véhicule-à-tout, V2X, dans un système de communication sans fil, le procédé consistant à :

   sélectionner, par l'UE V2X, une première ressource pour une transmission d'un canal physique partagé latéral, PSSCH ;
   sélectionner, par l'UE V2X, une seconde ressource, **caractérisé en ce que** la seconde ressource est pour une réservation d'une retransmission du PSSCH en fonction d'une restriction selon laquelle une durée entre la première ressource et la seconde ressource est inférieure ou égale à une valeur prédéfinie,
   établir, par l'UE V2X, une retransmission du PSSCH par l'intermédiaire de la seconde ressource après la durée de transmission du PSSCH par l'intermédiaire de la première ressource.

2. Procédé selon la revendication 1, dans lequel une longueur d'une table de bits de sous-trame indiquant la ressource latérale comprenant la première ressource est déterminée à partir d'un ensemble de valeurs, l'ensemble de valeurs comprenant {10 ms, 20 ms, 50 ms, 100 ms}.

3. Procédé selon la revendication 1, dans lequel si un groupe de ressources est modifié, l'UE V2X procède à une nouvelle sélection de ressource.

4. Procédé selon la revendication 1, dans lequel, si l'UE V2X établit une retransmission plus de deux fois, chaque retransmission est établie dans un nombre m maximum de sous-trames.

**5.** Équipement utilisateur, UE, (20) transmettant des données de véhicule-à-tout, V2X, dans un système de communication sans fil, l'UE comprenant :

un émetteur (22) et un récepteur (21) ; et

un processeur (23), le processeur étant configuré pour sélectionner une première ressource pour une transmission d'un canal physique partagé latéral, PSSCH, pour sélectionner une seconde ressource et **caractérisé en ce que** la seconde ressource sert pour une réservation d'une retransmission du PSSCH en fonction d'une restriction selon laquelle une durée entre la première ressource et la seconde ressource est inférieure ou égale à une valeur prédéfinie et pour établir une retransmission du PSSCH par l'intermédiaire de la seconde ressource après la durée de transmission du PSSCH par l'intermédiaire de la première ressource.

# FIG. 1

Radio frame

| Slot | | | | | |
|------|------|------|------|------|------|
| #0 | #1 | #2 | ... | #18 | #19 |

Subframe

(a)

One radio frame, $T_s = 307200T = 10ms$

One half-frame, $T_s = 153600T = 5ms$

One slot
$T_{slot} = 15360T_s$

$30720T_s$

| Subframe#0 | | | | Subframe#2 | Subframe#3 | Subframe#4 | Subframe#5 | | | | Subframe#7 | Subframe#8 | Subframe#9 |

One subframe,
$30720T_s$

DwPTS  GP  UpPTS

DwPTS  GP  UpPTS

(b)

EP 3 373 641 B1

# FIG. 2

One downlink slot

7 OFDM symbols

Resource block
12×7 Resource element

Resource element

$N^{DL} \times 12$ subcarriers

12 subcarriers

# FIG. 3

Control region          Data region

Frequency

Time

1st slot          2nd slot

One subframe

# FIG. 4

# FIG. 5

(a)

(b)

# FIG. 6

Symbol
index

#0 #1 #2 #3 #4 #5 #6 #7 #8 #9 #10 #11 #12 #13

← D2DSS subframe →

( a ) Normal CP

#0 #1 #2 #3 #4 #5 #6 #7 #8 #9 #10 #11

( b ) Extended CP

: PD2DSS        : SD2DSS        : PD2DSCH

: demodulation reference signal for PD2DSCH

: guard symbol for transmit/receive switching

# FIG. 7

D2DSS

eNB        D2D UE in coverage      D2D UE outside coverage

eNB synch coverage

# FIG. 8

eNB

UE1

UE2

(a)

Frequency

| Unit #(N$_F$-1) | Unit #(2N$_F$-1) | | Unit #(N$_F$*N$_T$-1) | Unit #(N$_F$-1) |

⋮

| Unit #1 | Unit #(N$_F$+1) | | Unit #(N$_F$*N$_T$-N$_F$+1) | Unit #1 |

• • •

| Unit #0 | Unit #N$_F$ | | Unit #(N$_F$*N$_T$-N$_F$) | Unit #0 |

Time

D2D signal
transmission from a UE
allocated with unit #0

(b)

34

# FIG. 9

EP 3 373 641 B1

35

## FIG. 10

Initial transmission candidate subframes
when retx num=2

Initial transmission candidate subframes
when retx num=4

# FIG. 11

Event triggered message SA Pool

Periodic message SA Pool 1

Periodic message SA Pool 2

Scheduling period for event triggered message SA pool

Scheduling period for SA pool 1

Scheduling period for SA pool 2

: UE1
: UE2
: UE3
: UE4
: UE5
: UE6
: UE7

# FIG. 12

## FIG. 13

## FIG. 14

# FIG. 15

EP 3 373 641 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **INTEL CORPORATION.** System Level Analysis of V2X Performance in Freeway Scenario. *3GPP DRAFT; R1-155329*